(19) Europäisches Patentamt / European Patent Office / Office européen des brevets

(11) **EP 3 397 591 B1**

(12) **EUROPEAN PATENT SPECIFICATION**

(45) Date of publication and mention
of the grant of the patent:
**05.08.2020  Bulletin 2020/32**

(51) Int Cl.:
*C01B 32/174* (2017.01)    *C08J 5/00* (2006.01)
*C08K 3/04* (2006.01)    *C08L 23/10* (2006.01)
*B82Y 30/00* (2011.01)    *C08J 3/20* (2006.01)
*C08J 3/22* (2006.01)    *C09D 123/12* (2006.01)

(21) Application number: **16822788.2**

(22) Date of filing: **02.12.2016**

(86) International application number:
**PCT/US2016/064577**

(87) International publication number:
**WO 2017/116607 (06.07.2017 Gazette 2017/27)**

(54) **HIGH IMPACT STRENGTH POLYPROPYLENE COMPOSITES**

HOCHSCHLAGFESTE POLYPROPYLENKOMPOSITE

COMPOSITES DE POLYPROPYLÈNE À RÉSISTANCE ÉLEVÉE AUX CHOCS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2015  US 201562272468 P
15.04.2016  US 201662323146 P
15.04.2016  US 201662323151 P**

(43) Date of publication of application:
**07.11.2018  Bulletin 2018/45**

(73) Proprietors:
• **SABIC Global Technologies B.V.
4612 PX Bergen op Zoom (NL)**
• **Georgia Tech Research Corporation
Atlanta, GA 30318 (US)**

(72) Inventors:
• **WANG, Po-Hsiang
Atlanta
Georgia 30339 (US)**
• **GHOSHAL, Sushanta
Atlanta,
Georgia 30318 (US)**
• **GULGUNJE, Prabhakar
Smyrna
Georgia 30080 (US)**
• **VERGHESE, Nikhil
Lake Jackson
Texas 77566 (US)**
• **KUMAR, Satish
Atlanta
Georgia 30345 (US)**

(74) Representative: **Lang, Johannes
Bardehle Pagenberg Partnerschaft mbB
Patentanwälte, Rechtsanwälte
Prinzregentenplatz 7
81675 München (DE)**

(56) References cited:
**CN-A- 1 654 528**

• **CAUSIN V ET AL: "Nucleation, structure and lamellar morphology of isotactic polypropylene filled with polypropylene-grafted multiwalled carbon nanotubes", EUROPEAN POLYMER JOURNAL, PERGAMON PRESS LTD. OXFORD, GB, vol. 45, no. 8, 1 August 2009 (2009-08-01) , pages 2155-2163, XP026336890, ISSN: 0014-3057, DOI: 10.1016/J.EURPOLYMJ.2009.05.026 [retrieved on 2009-05-27]**
• **YANG B X ET AL: "Enhancement of the mechanical properties of polypropylene using polypropylene-grafted multiwalled carbon nanotubes", COMPOSITES SCIENCE AND TECHNOLOGY, ELSEVIER, AMSTERDAM, NL, vol. 68, no. 12, 1 September 2008 (2008-09-01), pages 2490-2497, XP025431667, ISSN: 0266-3538, DOI: 10.1016/J.COMPSCITECH.2008.05.001 [retrieved on 2008-05-08]**

- **QINGLIANG HE ET AL: "Flame-Retardant Polypropylene/Multiwall Carbon Nanotube Nanocomposites: Effects of Surface Functionalization and Surfactant Molecular Weight", MACROMOLECULAR CHEMISTRY AND PHYSICS., vol. 215, no. 4, 13 February 2014 (2014-02-13), pages 327-340, XP55344841, DE ISSN: 1022-1352, DOI: 10.1002/macp.201300608**

**Description**

TECHNICAL FIELD AND BACKGROUND

The present disclosure relates to high impact strength polymer composites, more specifically high impact strength polypropylene (HIPP) composites containing polypropylene coated multiwall carbon nanotubes and methods of making same.

V. Causin et al., "Nucleation, structure and lamellar morphology of isotactic polypropylene filled with polypropylene-grafted multiwalled carbon nanotubes", European Polymer Journal, 2009, 45(8): 2155-2163, studied polypropylene-based nanocomposites containing polypropylene-grafted multiwalled carbon nanotubes (MWNT), wherein functionalized MWNT were covalently bonded to maleic anhydride grafted polypropylene. B.-X. Yang et al., "Enhancement of the mechanical properties of polypropylene using polypropylene-grafted multiwalled carbon nanotubes," Composites Science and Technology, 2008, 68(12): 2490-2497, studied the mechanical properties of polypropylene-grafted multiwalled carbon nanotubes, wherein the polypropylene chains were grafted onto MWNTs using covalent bonds. CN 1 654 528 A and Qingliang He et al., "Flame-Retardant Polypropylene/Multiwall Carbon Nanotube Nanocomposites: Effects of Surface Functionalization and Surfactant Molecular Weight," Macromolecular Chemistry and Physics, 2014, 215(4): 327-340, relate to polypropylene/carbon nanotube composite materials which include covalent bonding.

BRIEF DESCRIPTION OF THE DRAWINGS

For a detailed description of the preferred embodiments of the disclosed methods, reference will now be made to the accompanying drawings in which:

Figure 1 displays a schematic illustration of a micro-compounder used for preparing nanocomposites;

Figures 2A and 2B display photographs of (a) tensile and (b) impact bars prepared from control polypropylene (PP) and various polypropylene-coated functionalized multiwall carbon nanotubes (PP/f-MWNT) nanocomposites before testing;

Figure 3 displays photographs of various samples (control PP and various PP/f-MWNT nanocomposites) after tensile testing;

Figure 4 displays photographs of various samples (control PP and various PP/f-MWNT nanocomposites) after impact testing;

Figures 5A to 5C display the Notched Izod impact strength of PP nanocomposites prepared from (a) pristine multiwall carbon nanotubes (p-MWNT), (b) maleic anhydride grafted PP (MA-g-PP)-coated functionalized multiwall carbon nanotubes (MA-g-PP/f-MWNT) master batch and (c) PP/f-MWNT master batch;

Figures 6A to 6C display the tensile modulus of PP nanocomposites prepared from (a) p-MWNT, (b) MA-g-PP/f-MWNT master batch and (c) PP/f-MWNT master batch;

Figures 7A to 7C display yield stress of PP/MWNT nanocomposites prepared from (a) p-MWNT, (b) MA-g-PP/f-MWNT master batch and (c) PP/f-MWNT master batch;

Figures 8A to 8C display strain to failure of PP/MWNT nanocomposites prepared from (a) p-MWNT, (b) MA-g-PP/f-MWNT master batch and (c) PP/f-MWNT master batch;

Figures 9A to 9I display scanning electron microscopy (SEM) images of PP/MWNT (1 wt.%) nanocomposites impact-fractured surface prepared from (a,d,g) p-MWNT, (b,e,h) MA-g-PP/f-MWNT master batch, and (c,f,i) PP/f-MWNT master batch before etching;

Figures 10A to 10D display photographs of the impact fractured specimens for (a) PP/f-MWNT master batch; (b) MA-g-PP/f-MWNT master batch; and (c) p-MWNT; Figure 10d displays SEM images of PP/f-MWNT nanocomposite (at 1 wt.% MWNT) impact-fractured surface prepared from PP/f-MWNT master batch;

Figure 11 displays SEM images of PP/MWNT nanocomposites (at 1 wt.% MWNT) impact-fractured surface prepared from MA-g-PP/f-MWNT master batch;

Figure 12 displays SEM images of PP/MWNT nanocomposites (at 1 wt.% MWNT) impact-fractured surface prepared from p-MWNT;

Figures 13A to 13I display (a-c) optical micrographs at 1 wt.% MWNT showing dispersion quality in the three type of nanocomposites; (d-i) optical micrographs of nanocomposites formed from p-MWNT at different MWNT concentrations;

Figure 14 displays SEM images of fractured surfaces of PP/p-MWNT nanocomposites at 1 wt.% p-MWNT after impact test;

Figures 15A to 15I display SEM images of PP/MWNT (1 wt.% MWNT) nanocomposites impact-fractured surfaces from (a,d,g) p-MWNT, (b,e,h) MA-g-PP/f-MWNT master batch and (c,f,i) PP/f-MWNT master batch after acid etching;

Figure 16 displays SEM images of fractured surfaces of PP/f-MWNT nanocomposites formed from PP/f-MWNT master batch at 1 wt.% f-MWNT after impact test;

Figures 17A to 17D display polarized optical micrographs (POM) under cross-polars of (a) PP; and PP/MWNT (1 wt.% MWNT) nanocomposites containing (b) p-MWNT, (c) MA-g-PP/f-MWNT master batch and (d) PP/f-MWNT master batch;

Figures 18A to 18C display wide angle X-ray diffraction (WAXD) plots of injection molded rectangular bars of 1 wt.% MWNT containing nanocomposites prepared from (a) p-MWNT, (b) MA-g-PP/f-MWNT master batch and (c) PP/f-MWNT master batch;

Figures 19A to 19C display WAXD plots of PP/MWNT nanocomposite tensile specimens of 1 wt.% MWNT containing nanocomposites prepared from (a) p-MWNT, (b) MA-g-PP/f-MWNT master batch and (c) PP/f-MWNT master batch;

Figures 20A to 20D display differential scanning calorimetry (DSC) thermograms of control PP and various nanocomposites prepared from p-MWNT, MA-g-PP/f-MWNT master batch and PP/f-MWNT master batch at 1 wt.% MWNT loading;

Figures 21A to 21D display SEM images showing lamellar morphology of the PP/MWNT nanocomposites prepared (a,b) from MA-g-PP/f-MWNT master batch and (c,d) from PP/f-MWNT master batch;

Figure 22 displays polarized optical micrographs under cross-polars of PP/f-MWNT nanocomposites containing MA-g-PP/f-MWNT master batch at (a) 0.5 wt.% MWNT concentration and (b) 1 wt.% MWNT concentration;

Figures 23A to 23C display polarized optical micrographs under cross-polars of (a) control PP, (b) solution processed PP and (c) 19 wt.% solution processed PP in injection molded PP samples;

Figures 24A and 24B display WAXD plots of (a) PP powder, solution processed PP powder, and PP/f-MWNT master batch; (b) injection molded control PP tensile specimen, PP/19 wt.% solution processed PP tensile specimen and 1 wt.% MWNT containing nanocomposite based on PP/f-MWNT master batch;

Figures 25A to 25D display photographs of the fractured surfaces of the impact tested samples prepared from (a) control PP and 1 wt.% MWNT containing nanocomposites formed from (b) p-MWNT, (c) MA-g-PP/f-MWNT master batch and (d) PP/f-MWNT master batch;

Figures 26A to 26E display SEM images of PP/MWNT nanocomposites impact-fractured surface of nanocomposites prepared from (a,d,e) PP/f-MWNT master batch; (b) MA-g-PP/f-MWNT master batch; and (c) p-MWNT;

Figures 27A to 27C display SEM images of PP/MWNT nanocomposites (at 1 wt.% MWNT loading) impact-fractured surface prepared from (a) PP/f-MWNT master batch; (b) MA-g-PP/f-MWNT master batch; and (c) p-MWNT after acid etching;

Figure 28 displays SEM images of PP/MWNT nanocomposites (at 1 wt.% MWNT loading) impact-fractured surface prepared from PP/f-MWNT master batch after etching;

Figure 29 displays SEM images of PP/MWNT nanocomposites (at 1 wt.% MWNT loading) impact-fractured surface prepared from MA-g-PP/f-MWNT master batch after etching;

Figure 30 displays SEM images of PP/MWNT nanocomposites (at 1 wt.% MWNT loading) impact-fractured surface prepared from p-MWNT after etching;

Figures 31A to 31F display SEM images of PP/MWNT nanocomposites impact-fractured surface prepared from (a,b and d,e) PP/f-MWNT master batch and (c,f) p-MWNT;

Figures 32A to 32D display SEM images (a, b, c, d) of PP/MWNT (1 wt.%) nanocomposites impact-fractured surfaces of nanocomposites prepared from PP/f-MWNT master batch, wherein (c) is a schematic drawing of (a);

Figures 33A to 33C display the full width at half maximum (FWHM) of the (040) WAXD peak of (a) impact and (b) tensile samples prepared from PP and PP/MWNT nanocomposites at different MWNT concentrations; (c) viscosity of the PP and PP/MWNT nanocomposites at different MWNT concentrations at a temperature of 200 °C and at 300 s$^{-1}$;

Figure 34 displays PP/MWNT nanocomposites prepared from PP/f-MWNT master batch (left), MA-g-PP/f-MWNT master batch (middle) and p-MWNT (right) used for Raman spectroscopy study at different MWNT concentrations;

Figure 35 displays heat deflection temperatures of PP/MWNT nanocomposites prepared from p-MWNT, MA-g-PP/f-MWNT master batch, and PP/f-MWNT master batch;

Figures 36A to 36C display heat deflection temperature (HDT) vs. tensile modulus of various nanocomposites formed from (a) p-MWNT (b) MA-g-PP/f-MWNT master batch, and (c) PP/f-MWNT master batch; and

Figure 37 displays thermal degradation temperatures of PP/MWNT nanocomposites prepared from p-MWNT, MA-g-PP/f-MWNT master batch, and PP/f-MWNT master batch.

DETAILED DESCRIPTION

The present invention provides a high impact strength polypropylene (HIPP) composite according to claim 8 and a method of making same according to claim 1. The HIPP composite comprises a continuous polymeric phase having dispersed therein a plurality of polypropylene-coated functionalized multiwall carbon nanotubes (PP/f-MWNT), wherein the continuous polymeric phase comprises a first polypropylene (PP), wherein the PP/f-MWNT comprise functionalized multiwall carbon nanotubes (f-MWNT) coated with a second PP via non-covalent interactions, wherein the HIPP composite comprises PP/f-MWNT in an amount of from about 0.0005 wt.% to about 5 wt.% f-MWNT, based on the total weight of the HIPP, and wherein the first PP and the second PP are the same or different. The HIPP can have an impact strength of from about 4.0 kJ/m$^2$ to about 6.5 kJ/m$^2$, as determined in accordance with ASTM D256. In an embodiment, the non-covalent interactions can comprise intermolecular CH-$\pi$ interactions. In an embodiment, the non-covalent interactions exclude hydrogen bonding.

A method of making a HIPP composite comprises the steps of (a) blending PP/f-MWNT with a first PP to produce a PP and PP/f-MWNT mixture, wherein the PP/f-MWNT comprise f-MWNT coated with a second PP via non-covalent interactions, wherein the PP and PP/f-MWNT mixture comprises PP/f-MWNT in an amount of from about 0.0005 wt.% to about 5 wt.% f-MWNT, based on the total weight of the PP and PP/f-MWNT mixture, and wherein the first PP and the second PP are the same or different; (b) melt blending at least a portion of the PP and PP/f-MWNT mixture to form a molten PP and PP/f-MWNT mixture; and (c) shaping at least a portion of the molten PP and PP/f-MWNT mixture to form the HIPP composite. The step (c) of shaping at least a portion of the molten PP and PP/f-MWNT mixture can comprise injection molding.

A method of making a HIPP composite comprises a step of blending PP/f-MWNT with a first PP to produce a PP and PP/f-MWNT mixture, wherein the PP/f-MWNT comprise functionalized multiwall carbon nanotubes (f-MWNT) coated with a second PP via non-covalent interactions, and wherein the first PP and the second PP are the same or different. In some embodiments, the first PP can comprise a PP homopolymer. In other embodiments, the first PP can comprise PP copolymers, such as ethylene/propylene copolymers, ethylene/propylene/diene terpolymers, and the like, or combinations thereof. In yet other embodiments, the first PP can comprise PP homopolymers, PP copolymers, blends thereof, or combinations thereof.

In some embodiments, the first PP and the second PP are the same. In other embodiments, the first PP and the second PP are different.

In an embodiment, the first PP and/or the second PP can be isotactic, syndiotactic, atactic, or combinations thereof. Tacticity is a property of polymers comprising regular substituents (originating in the monomer(s) used for forming the polymer) on the polymer chain. When the substituents are arranged in an irregular, random fashion, the polymer is atactic. When the substituents are all on the same side of the chain, the polymer is isotactic. When the substituents alternate regularly from one side of the chain to the other, the polymer is syndiotactic. Isotactic and syndiotactic polymers are referred to as stereoregular, that is, polymers having an ordered arrangement of pendant groups along the chain. For example, in isotactic PP, all the methyl (-CH$_3$) groups are arranged along the same side of the polymer chain. Generally, stereoregular polymers are usually high-strength materials owing to an uniform structure leading to close packing of the polymer chains, which can result in a high degree of crystallinity.

In an embodiment, the first PP and/or the second PP can be characterized by an isotacticity of from about 0% to 100%, alternatively from about 90% to 100%, alternatively from about 95% to 100%, alternatively from about 96% to about 99%, or alternatively from about 92% to about 96%, as measured by $^{13}$C nuclear magnetic resonance ($^{13}$C NMR) spectroscopy. For example, for high stiffness applications (e.g., pipe extrusion, injection molding, thin wall injection molding) the PP (e.g., the first PP and/or the second PP) can be characterized by an isotacticity of from about 95% to 100%, or alternatively from about 96% to about 99%. As another example, for film applications, the PP (e.g., the first PP and/or the second PP) can be characterized by an isotacticity of from about 92% to about 96%.

In an embodiment, the first PP and/or the second PP can be characterized by a melt flow index (MFI) of from about 0.1 dg/min to about 250 dg/min, alternatively from about 0.1 dg/min to about 200 dg/min, alternatively from about 0.1 dg/min to about 1 dg/min, alternatively from about 1 dg/min to about 10 dg/min, or alternatively from about 10 dg/min to about 200 dg/min, as determined in accordance with ISO 1133 under a load of 2.16 kg. For example, for pipe extrusion applications the PP (e.g., the first PP and/or the second PP) can be characterized by an MFI of from about 0.1 dg/min to about 1 dg/min; while for injection molding, the PP (e.g., the first PP and/or the second PP) can be characterized by an MFI of from about 10 dg/min to about 200 dg/min.

In an embodiment, the first PP and/or the second PP can be characterized by a molecular weight distribution (MWD) of from about 1 to about 10, alternatively from about 2 to about 8, alternatively from about 2 to about 4, or alternatively from about 4 to about 8, as determined in accordance with size exclusion chromatography/differential viscometry (SEC/DV). Generally, MWD, also known as polydispersity index, is a measure of the distribution of molecular mass in a given polymer sample. MWD can be calculated by dividing the weight average molecular weight by the number average molecular weight. As an example, for fibers applications the PP (e.g., the first PP and/or the second PP) can be characterized by a MWD of from about 2 to about 4; while for injection molding, the PP (e.g., the first PP and/or the second PP) can be characterized by a MWD of from about 4 to about 8.

In an embodiment, the first PP can be dried prior to the step of blending PP/f-MWNT with the first PP. As will be appreciated by one of skill in the art, and with the help of this disclosure, the first PP can be dried to remove moisture (e.g., water) from the PP. Further, as will be appreciated by one of skill in the art, and with the help of this disclosure, exposure of the first PP to moisture at subsequent processing temperatures (e.g., temperatures during melt blending) can cause polymer chain hydrolysis, which can break long polymeric chains into shorter fragments, reducing polymer strength.

In an embodiment, the first PP can be dried at a temperature of from about 50 °C to about 100 °C, alternatively from about 60 °C to about 95 °C, or alternatively from about 70 °C to about 90 °C. In an embodiment, the first PP can be dried for a time period of from about 30 minutes to about 24 hours, alternatively from about 1 hour to about 16 hours, or alternatively from about 2 hours to about 8 hours.

In some embodiments, drying the first PP can occur under vacuum. In other embodiments, drying the first PP can occur at ambient pressure (e.g., without vacuum). In an embodiment, drying the first PP can occur at a pressure of from about 50 mbar to about 1,013 mbar, alternatively from about 100 mbar to about 900 mbar, or alternatively from about 200 mbar to about 800 mbar.

In an embodiment, the first PP can be a powder characterized by an average powder particle size of from about 10 $\mu$m to about 1 mm, alternatively from about 50 $\mu$m to about 750 $\mu$m, or alternatively from about 100 $\mu$m to about 500 $\mu$m. In embodiments where the first PP is not a powder, the first PP can be subjected to grinding, crushing, milling, chopping, and the like, or combinations thereof to form a first PP powder characterized by an average powder particle size of from about 10 $\mu$m to about 1 mm. As will be appreciated by one of skill in the art, and with the help of this disclosure, it is more efficient to dry the first PP in powder form, as more moisture can be removed from the PP when in powder form.

In an embodiment, the PP/f-MWNT as described herein can comprise f-MWNT in an amount of from about 0.5 wt.% to about 80 wt.%, alternatively from about 1 wt.% to about 60 wt.%, or alternatively from about 10 wt.% to about 50 wt.%, based on the total weight of the PP/f-MWNT; and the second PP in an amount of from about 20 wt.% to about 99.5 wt.%, alternatively from about 40 wt.% to about 99 wt.%, or alternatively from about 50 wt.% to about 90 wt.%, based on the total weight of the PP/f-MWNT.

The second PP coats the f-MWNT via non-covalent interactions. In an embodiment, the non-covalent interactions exclude hydrogen bonding. In some embodiments, the non-covalent interactions can comprise intermolecular CH-$\pi$ interactions, wherein the intermolecular CH-$\pi$ interactions can be characterized by an upshift in the $CH_2$ torsion motion, when compared to the $CH_2$ torsion motion of the same PP (e.g., second PP) used for coating the f-MWNT but in the absence of the f-MWNT; and wherein the upshift is an increase in the wavenumber of from about 4 $cm^{-1}$ to about 10 $cm^{-1}$, alternatively from about 4 $cm^{-1}$ to about 9 $cm^{-1}$, or alternatively from about 5 $cm^{-1}$ to about 8 $cm^{-1}$, as determined by Fourier transform infrared spectroscopy (FTIR).

In an embodiment, the f-MWNT of the PP/f-MWNT can have a diameter of from about 5 nm to about 200 nm, alternatively from about 10 nm to about 150 nm, or alternatively from about 20 nm to about 100 nm. In an embodiment, the f-MWNT of the PP/f-MWNT can have a length of from about 0.5 microns to about 1 mm, alternatively from about 1 micron to about 750 microns, or alternatively from about 5 microns to about 500 microns. In an embodiment, the f-MWNT of the PP/f-MWNT can have from about 3 walls to about 100 walls, alternatively from about 5 walls to about 75 walls, or alternatively from about 8 walls to about 50 walls. The f-MWNT can be prepared by any suitable methodology, such as introducing carboxylic acid groups (-COOH) in the structure of multiwall carbon nanotubes (MWNT), for example by treatment with nitric acid.

In an embodiment, the PP/f-MWNT can have a PP coating thickness of from about 1 nm to about 10 nm, alternatively from about 1.5 nm to about 9.5 nm, or alternatively from about 2 nm to about 9 nm.

In an embodiment, the second PP of the PP/f-MWNT can be characterized by a thermal decomposition temperature, a crystallization temperature, and a melting temperature that can be increased when compared to a thermal decomposition temperature, a crystallization temperature, and a melting temperature, respectively, of the same second PP used for coating the f-MWNT but in the absence of the f-MWNT.

In an embodiment, the PP/f-MWNT can be dried prior to the step of blending PP/f-MWNT with a first PP. As will be appreciated by one of skill in the art, and with the help of this disclosure, the PP/f-MWNT can be dried to remove moisture (e.g., water) from the PP/f-MWNT. Further, as will be appreciated by one of skill in the art, and with the help of this disclosure, exposure of PP (e.g., first PP second PP) to moisture at subsequent processing temperatures (e.g., temperatures during melt blending) can cause polymer chain hydrolysis, which can break long polymeric chains into shorter fragments, reducing polymer strength.

In an embodiment, the PP/f-MWNT can be dried at a temperature of from about 50 °C to about 100 °C, alternatively from about 60 °C to about 95 °C, or alternatively from about 70 °C to about 90 °C. In an embodiment, the PP/f-MWNT can be dried for a time period of from about 30 minutes to about 24 hours, alternatively from about 1 hour to about 16 hours, or alternatively from about 2 hours to about 8 hours.

In some embodiments, drying the PP/f-MWNT can occur under vacuum. In other embodiments, drying the PP/f-MWNT can occur at ambient pressure (e.g., without vacuum). In an embodiment, drying the PP/f-MWNT can occur at a pressure of from about 50 mbar to about 1,013 mbar, alternatively from about 100 mbar to about 900 mbar, or alternatively from about 200 mbar to about 800 mbar.

In an embodiment, the PP/f-MWNT can be a powder characterized by an average powder particle size of from about 10 $\mu$m to about 1 mm, alternatively from about 50 $\mu$m to about 750 $\mu$m, or alternatively from about 100 $\mu$m to

about 500 μm. In embodiments where the PP/f-MWNT is not a powder, the PP/f-MWNT can be subjected to grinding, crushing, milling, chopping, and the like, or combinations thereof to form a PP/f-MWNT powder characterized by an average powder particle size of from about 10 μm to about 1 mm. As will be appreciated by one of skill in the art, and with the help of this disclosure, it is more efficient to dry the PP/f-MWNT in powder form, as more moisture can be removed from the PP/f-MWNT when in powder form.

In an embodiment, the PP/f-MWNT is of a type disclosed in U.S. Provisional Pat. App. No. 62/323,146, filed April 15, 2016, and incorporated by reference herein in its entirety.

In an embodiment, the PP/f-MWNT can be blended with the first PP by using any suitable methodology to produce a PP and PP/f-MWNT mixture. In some embodiments, the PP/f-MWNT can be blended (e.g., dry blended) with the first PP in a blender, a powder blender, a ribbon blender, a paddle blender, a plow blender, a mixer, a powder mixer, a fluidized bed mixer, and the like, or combinations thereof.

In some embodiments, the step of blending PP/f-MWNT with a first PP can further comprise subjecting the PP and PP/f-MWNT mixture to grinding, crushing, milling, chopping, and the like, or combinations thereof to form a PP and PP/f-MWNT mixture powder, wherein the PP and PP/f-MWNT mixture powder can be characterized by an average powder particle size of from about 10 μm to about 1 mm, alternatively from about 50 μm to about 750 μm, alternatively from about 100 μm to about 500 μm. As will be appreciated by one of skill in the art, and with the help of this disclosure, when the PP/f-MWNT and the first PP are not in powder form when mixed, or when the powder particle size for either PP/f-MWNT or the first PP is larger than desired, the PP and PP/f-MWNT mixture can be further converted to a powder of a desired particle size.

In some embodiments, the PP and PP/f-MWNT mixture (e.g., PP and PP/f-MWNT mixture powder) can be dried prior to a step of melt blending at least a portion of the PP and PP/f-MWNT mixture. As will be appreciated by one of skill in the art, and with the help of this disclosure, the first PP and PP/f-MWNT mixture can be dried to remove moisture (e.g., water) from the PP and PP/f-MWNT mixture.

In an embodiment, the PP and PP/f-MWNT mixture can be dried at a temperature of from about 50 °C to about 100 °C, alternatively from about 60 °C to about 95 °C, or alternatively from about 70 °C to about 90 °C; for a time period of from about 30 minutes to about 24 hours, alternatively from about 1 hour to about 16 hours, or alternatively from about 2 hours to about 8 hours; and at a pressure of from about 50 mbar to about 1,013 mbar, alternatively from about 100 mbar to about 900 mbar, or alternatively from about 200 mbar to about 800 mbar.

The PP and PP/f-MWNT mixture comprises PP/f-MWNT in an amount of from about 0.0005 wt.% to about 5 wt.% f-MWNT, alternatively from about 0.001 wt.% to about 4 wt.% f-MWNT, alternatively from about 0.01 wt.% to about 3 wt.% f-MWNT, alternatively from about 0.1 wt.% to about 2 wt.% f-MWNT, or alternatively from about 0.5 wt.% to about 1 wt.% f-MWNT, based on the total weight of the PP and PP/f-MWNT mixture.

As will be appreciated by one of skill in the art, and with the help of this disclosure, the method of making a HIPP composite as disclosed herein is a master batch dilution method, wherein the PP/f-MWNT is the master batch. For purposes of the disclosure herein, the PP/f-MWNT can also be referred to as "PP/f-MWNT master batch." Further, for purposes of the disclosure herein, the term "master batch" refers to a concentrated mixture of carbon nanotubes, which may be coated with a polymer (e.g., PP/f-MWNT); wherein the mixture is concentrated in carbon nanotubes. For example, the PP/f-MWNT master batch as described herein can comprise f-MWNT in an amount of from about 0.5 wt.% to about 80 wt.%, which represents a relatively high concentration of f-MWNT in the second PP. As will be appreciated by one of skill in the art, and with the help of this disclosure, the PP/f-MWNT master batch as produced will contain a certain amount of extraneous second PP that doesn't form a PP coating around the f-MWNT, and such extraneous second PP along with the polymer-coated carbon nanotubes forms the master batch. The PP/f-MWNT master batch can be diluted with the first PP as described herein, to produce the HIPP composite as described herein, wherein the HIPP composite comprises PP/f-MWNT in an amount of from about 0.0005 wt.% to about 5 wt.% f-MWNT, which represents a relatively low concentration of f-MWNT in the first PP, when compared to the concentration of the f-MWNT in the master batch.

A method of making a HIPP composite comprises a step of melt blending at least a portion of the PP and PP/f-MWNT mixture to form a molten PP and PP/f-MWNT mixture. Melt blending generally involves the melting of a polymer or polymer mixture in the presence of any desired additives (e.g., PP/f-MWNT) to form a molten polymeric mixture, which is a viscous liquid. Some melt blending methods can involve the use of high shear rates to provide for an uniform dispersion of any additives (e.g., PP/f-MWNT) in the polymer melt.

In an embodiment, the melt blending can comprise one or more selected from the group consisting of compounding, melt mixing, and extruding. Compounding generally refers to a process of melt blending polymers with additives, such as reinforcing agents (e.g., PP/f-MWNT) for changing or improving physical (e.g., impact strength), thermal, electrical or aesthetic characteristics of the polymer subjected to compounding. A final product produced by a compounding process can be referred to as a "compound" or "composite," for example a "nanocomposite" when the size of additive particles introduced to the polymer is in the nano size range. Melt mixing generally refers to a process of melt blending polymers with additives, such as reinforcing agents (e.g., PP/f-MWNT), wherein the process uses high shear for mixing the polymers and additives, to ensure that the additives do not form aggregates (e.g., the high shear disrupts aggregate formation). Extruding generally refers to a process of forming an extrudate (e.g., molten PP and PP/f-MWNT mixture), by forcing a polymeric mixture with the help of at least one rotating screw, preferably twin screw, through a die under controlled conditions of temperature and flow rate. Twin screw extruders generally provide extensive mixing and agitation that causes de-aggregation of suspended particles (e.g., PP/f-MWNT) in a molten polymeric mixture, thereby resulting in a uniform dispersion of particles in the molten mixture.

In an embodiment, the step of melt blending at least a portion of the PP and PP/f-MWNT mixture can comprise heating the PP and PP/f-MWNT mixture to a temperature effective to melt the first PP. In an embodiment, the step of melt blending at least a portion of the PP and PP/f-MWNT mixture can comprise heating the PP and PP/f-MWNT mixture to a temperature of from about 150 °C to about 240 °C, alternatively from about 180 °C to about 240 °C, or alternatively from about 185 °C to about 235 °C, to form the molten PP and PP/f-MWNT mixture.

A method of making a HIPP composite comprises a step of shaping at least a portion of the molten PP and PP/f-MWNT mixture to form the HIPP composite. As will be appreciated by one of skill in the art and with the help of this disclosure, a molten polymeric mixture (e.g., molten PP and PP/f-MWNT mixture), which is a liquid (e.g., viscous liquid) has to be shaped or formed into a final composite, which is a solid. In an embodiment, the molten PP and PP/f-MWNT mixture can be shaped into the HIPP composite by using any suitable methodology.

In an embodiment, shaping at least a portion of the molten PP and PP/f-MWNT mixture can comprise one or more selected from the group consisting of molding, injection molding, extrusion molding, blow molding, compression molding, transfer molding, dip molding, rotational molding, matched molding, expandable bead molding, foam molding, vacuum plug assist molding, die casting, and extrusion.

In an embodiment, shaping at least a portion of the molten PP and PP/f-MWNT mixture can comprise injection molding. Generally, injection molding refers to a manufacturing process for producing plastic or polymeric parts by injecting or introducing a molten polymeric material into a mold, where it cools and solidifies into a final part.

In an embodiment, the step of shaping the molten PP and PP/f-MWNT mixture can comprise introducing (e.g., injecting) at least a portion of the molten PP and PP/f-MWNT mixture to a mold.

In some embodiments, the mold can be pre-heated, to prevent the molten mixture touching the mold from solidifying in a non-uniform manner. In an embodiment, the mold can be characterized by a temperature of from about 50 °C to about 120 °C, alternatively from about 60 °C to about 100 °C, or alternatively from about 70 °C to about 90 °C.

In other embodiments, the mold can be characterized by a temperature that is about the same as the ambient temperature (e.g., the mold is not pre-heated). In such embodiment, the molten mixture that is inside the mold begins to cool as soon as it makes contact with an interior mold surface.

In an embodiment, the step of shaping the molten PP and PP/f-MWNT mixture can comprise cooling the molten PP and PP/f-MWNT mixture in the mold to ambient temperature, to form the HIPP composite. As the molten PP and PP/f-MWNT mixture cools inside the mold, it will solidify into the shape of the mold (e.g., the shape of the desired part), to form the HIPP composite.

The HIPP composite as described herein comprises a continuous polymeric phase having dispersed therein a plurality of PP/f-MWNT, wherein the continuous polymeric phase comprises the first PP, wherein the PP/f-MWNT comprise f-MWNT coated with the second PP via non-covalent interactions, and wherein the first PP and the second PP are the same or different. In some embodiments, the first PP and the second PP are the same. In other embodiments, the first PP and the second PP are different. In an embodiment, the non-covalent interactions can comprise intermolecular CH-$\pi$ interactions. In an embodiment, the non-covalent interactions exclude hydrogen bonding. Given the nanometer size of the PP/f-MWNT (e.g., a diameter of from about 6 nm to about 210 nm, alternatively from about 15 nm to about 175 nm, or alternatively from about 25 nm to about 150 nm), the HIPP composite can also be referred to as a "HIPP nanocomposite," and the terms "composite" and "nanocomposite" can be used herein interchangeably with respect to the HIPP.

The HIPP composite comprises PP/f-MWNT in an amount of from about 0.0005 wt.% to about 5 wt.% f-MWNT, alternatively from about 0.001 wt.% to about 4 wt.% f-MWNT, alternatively from about 0.01 wt.% to about 3 wt.% f-MWNT, alternatively from about 0.1 wt.% to about 2 wt.% f-MWNT, or alternatively from about 0.5 wt.% to about 1 wt.% f-MWNT, based on the total weight of the HIPP.

In an embodiment, the HIPP composite can be characterized by a relatively uniform dispersion of PP/f-MWNT in the HIPP composite as a whole. In an embodiment, a volumetric concentration of the PP/f-MWNT in any 1 mm$^3$ of HIPP composite differs by less than about 10%, alternatively by less than about 7.5%, alternatively by less than about 5% from an average volumetric concentration of the PP/f-MWNT in the HIPP composite as a whole.

In an embodiment, the HIPP composite as described herein can have an impact strength of from about 4.0 kJ/m$^2$ to about 6.5 kJ/m$^2$, alternatively from about 4.25 kJ/m$^2$ to about 6.25 kJ/m$^2$, or alternatively from about 4.5 kJ/m$^2$ to about 6.0 kJ/m$^2$, as determined in accordance with ASTM D256. Generally, the impact strength of a material refers to the capability of the material to withstand a suddenly applied load, and can be expressed in terms of energy lost per unit cross-sectional area (e.g., J/m$^2$, kJ/m$^2$, etc.).

In an embodiment, the HIPP composite as described herein can have an impact strength that is increased by equal to or greater than about 150%, alternatively equal to or greater than about 175%, or alternatively equal to or greater than about 200% when compared to an impact strength of the first PP without the PP/f-MWNT, wherein the impact strength is determined in accordance with ASTM D256.

In an embodiment, the HIPP composite as described herein can have a tensile modulus that is equal to or greater than a tensile modulus of the first PP without the PP/f-MWNT, wherein the tensile modulus is determined in accordance with ASTM D638. Generally, the tensile modulus of a material (also referred to as Young's modulus, or elastic modulus) defines the relationship between stress (force per unit area) and strain (proportional deformation) in the material.

In an embodiment, the HIPP composite as described herein can have a yield stress that is equal to or greater than a yield stress of the first PP without the PP/f-MWNT, wherein the yield stress is determined in accordance with ASTM D638.

In an embodiment, the HIPP composite as described herein can have a yield stress that is increased by equal to or greater than about 2.5%, or alternatively equal to or greater than about 5%, when compared to a yield stress of the first PP without the PP/f-MWNT, wherein the yield stress is determined in accordance with ASTM D638.

In an embodiment, the HIPP composite as described herein can have a strain to failure (STF) of from about 100% to about 400%, alternatively from about 150% to about 375%, or alternatively from about 200% to about 350%, as determined in accordance with ASTM D638.

In an embodiment, the HIPP composite as described herein can have a heat deflection temperature (HDT) that is increased by equal to or greater than about 5 °C, alternatively equal to or greater than about 10 °C, or alternatively equal to or greater than about 15 °C when compared to a heat deflection temperature of the first PP without the PP/f-MWNT, as determined in accordance with ASTM D648. Generally, HDT of a material (e.g., polymeric material) refers to the temperature at which the material deforms under a specified load. The higher the HDT, the greater the ability of the material to retain stiffness (e.g., form) at higher temperatures.

In an embodiment, the HIPP composite as described herein can have a thermal decomposition temperature that is increased by equal to or greater than about 20 °C, alternatively equal to or greater than about 25 °C, or alternatively equal to or greater than about 30 °C when compared to a thermal decomposition temperature of the first PP without the PP/f-MWNT. Generally, the thermal decomposition temperature of a material (e.g., polymeric material) refers to the temperature at which the material chemically decomposes.

In an embodiment, the HIPP composite as described herein can have a crystallization temperature that is increased by equal to or greater than about 1 °C, alternatively equal to or greater than about 2.5 °C, alternatively equal to or greater than about 5 °C, or alternatively equal to or greater than about 8 °C when compared to a crystallization temperature of the first PP without the PP/f-MWNT, as determined by differential scanning calorimetry (DSC) thermal analysis in accordance with ASTM E794-06. Generally, the crystallization temperature of a polymer refers to the temperature at which polymer crystals form.

In an embodiment, the HIPP composite as described herein can have a crystallization half time at 135 °C of from about 1 minute to about 25 minutes, alternatively from about 2 minutes to about 20 minutes, or alternatively from about 3 minutes to about 15 minutes, as determined by DSC thermal analysis in accordance with ASTM E2070-13. The crystallization half time refers to the amount of time that it takes for the extent of crystallization to be at 50% of the total crystallization.

In an embodiment, the HIPP composite as described herein can be formed into any suitable article of manufacture by using any suitable methodology. In an embodiment, an article can be formed by injection molding of the HIPP composite. In some embodiments, the HIPP composite can be obtained by injection molding of the molten PP and PP/f-MWNT mixture, as previously described herein. In other embodiments, the HIPP composite (e.g., pellets of HIPP composite) can be melted to form a molten HIPP composite, wherein the molten HIPP composite can be injected into a mold to form an article.

Nonlimiting examples of articles that can be made from the HIPP composite of the present disclosure include containers, pipes, tanks, ducts, fittings, seals, membranes, automotive body parts, and the like, or combinations thereof.

In an embodiment, the HIPP composite can be produced by a process comprising the steps of (a) drying a first PP and PP/f-MWNT at a temperature of from about 50 °C to about 100 °C, at a pressure of from about 50 mbar to about 1,013 mbar, and for a time period of from about 30 minutes to about 24 hours, to produce a dried first PP and dried PP/f-MWNT, respectively, wherein the first PP is a powder characterized by an average powder particle size of from about 10 $\mu$m to about 1 mm, wherein the PP/f-MWNT are a powder characterized by an average powder particle size of from about 10 $\mu$m to about 1 mm, wherein the PP/f-MWNT comprise f-MWNT coated with a second PP via non-covalent interactions, and wherein the first PP and the second PP can be the same or different; (b) blending at least a portion of the dried PP/f-MWNT with at least a portion of the dried first PP to produce a PP and PP/f-MWNT mixture, wherein the PP and PP/f-MWNT mixture comprises PP/f-MWNT in an amount of from about 0.0005 wt.% to about 5 wt.% f-MWNT, based on the total weight of the PP and PP/f-MWNT mixture; (c) melt blending at least a portion of the PP and PP/f-MWNT mixture at a temperature of from about 180 °C to about 240 °C to form a molten PP and PP/f-MWNT mixture; and (d) injection molding at least a portion of the molten PP and PP/f-MWNT mixture to form the HIPP composite.

The HIPP composite comprises a continuous polymeric phase having dispersed therein a plurality of PP/f-MWNT wherein the continuous polymeric phase comprises a first PP, wherein the PP/f-MWNT comprise f-MWNT coated with a second PP via non-covalent interactions, wherein the HIPP composite comprises PP/f-MWNT in an amount of from about 0.0005 wt.% to about 5 wt.% f-MWNT, based on the total weight of the HIPP; wherein the first PP and the second PP are the same or different. The HIPP composite can have an impact strength that is increased by equal to or greater than about 150% when compared to an impact strength of the first PP without the PP/f-MWNT, wherein the impact strength is determined in accordance with ASTM D256. In such embodiment, the non-covalent interactions can comprise intermolecular CH-$\pi$ interactions; and the non-covalent interactions exclude hydrogen bonding.

In an embodiment, the HIPP composite comprising PP/f-MWNT, and methods of making same, as disclosed herein can advantageously display improvements in one or more composition characteristics when compared to an otherwise similar composition comprising the first PP without the PP/f-MWNT. In an embodiment, the HIPP composite comprising PP/f-MWNT can advantageously display an increased impact strength, increased heat deflection temperature, and increased thermal decomposition temperature, while maintaining similar tensile modulus and yield stress, when compared to an otherwise similar composition comprising the first PP without the PP/f-MWNT.

In an embodiment, the HIPP composite comprising PP/f-MWNT can advantageously display an increased crystallization temperature when compared to a crystallization temperature of an otherwise similar composition comprising the first PP without the PP/f-MWNT.

In an embodiment, the HIPP composite comprising PP/f-MWNT can advantageously display a decreased crystallization half time when compared to a crystallization half time of an otherwise similar composition comprising the first PP without the PP/f-MWNT. Such decreased crystallization half time of the HIPP composite comprising PP/f-MWNT can result in faster de-molding times during part processing, which in turn can result in shorter cycle times, and hence cost effectiveness. Further, such decreased crystallization half time of the HIPP composite comprising PP/f-MWNT can impact a variety of processes, for example prepreg fabrication, laminate and insert manufacturing, semi-finished goods manufacturing and fabrication processes such as injection molding, injection over molding, pultrusion, filament winding, and the like, or combinations thereof. Additional advantages of the HIPP composite comprising PP/f-MWNT, and methods of making same, as disclosed herein can be apparent to one of skill in the art viewing this disclosure.

EXAMPLES

The subject matter having been generally described, the following examples are given as particular embodiments of the disclosure and to demonstrate the practice and advantages thereof. It is understood that the examples are given by way of illustration and are not intended to limit the specification of the claims to follow in any manner.

**Materials.** Homopolymer polypropylene (PP) (melt flow rate 10 g/10 min) was supplied by SABIC, Netherlands. Multiwall carbon nanotube (MWNT)-grade SMW200 were purchased from Southwest Nanotechnology, Norman OK. Average number of walls (9 to 10) and average diameter (12 $\pm$ 3 nm) were determined from full width at half maximum (FWHM) of $2\theta\sim25.8°$ integrated peak from wide angle X-ray diffraction (WAXD) and scanning electron microscopy (SEM), respectively. MWNT impurity content was 2.3 wt.% based on thermogravimetric analysis (TGA) in air. Maleic anhydride grafted polypropylene (MA-g-PP: Epolene E-43) was obtained from Westlake Chemical Corporation, Longview TX. Molecular weight of MA-g-PP was 9100 g/mol. Butanol, xylene, and nitric acid were purchased from Sigma Aldrich and were used as received.

**Characterization.** Izod impact testing was carried out on notched samples according to ASTM D256 standard. Tensile testing was carried out according to ASTM D638 standard with 10 mm gauge length. Rate of crosshead displacement was 25.4 mm/min. Tensile tests were conducted using an Instron 5567. Extension was measured using an extensometer 2630-101, in the strain range of 0.1 to 0.4%. Heat deflection temperature (HDT) of the nanocomposites was measured on rectangular specimens. These specimens were similar to the ones used for impact testing. TA DMA Q800 was used to study the heat deflection temperature. ASTM D648 standard was followed for these tests using three point bending test geometry. To obtain HDT, static force of 0.85 N (0.45 MPa as recommended in ASTM D648) was applied to the sample and temperature was increased from 30 °C to 150 °C at the rate of 2 °C/min. The HDT reported here corresponds to the deflection of 244 $\mu$m (0.2% strain as recommended in ASTM D648). In each case, a minimum of 5 samples were tested for impact, as well as for tensile tests, while a minimum of 2 samples were tested for heat deflection temperature.

A polarized light optical microscope (Leica, DM 2500P) equipped with Linkam LTS420 heating stage was used to study the crystallization behavior. For this purpose, thin and small pieces of the injection molded samples were heated on glass plates covered with microscope cover slips. Samples were heated to 200 °C for 5 minutes and then cooled to 135 °C at a rate of 20 °C/min, and held at this temperature for monitoring crystallization behavior over a period of time. WAXD was performed using Rigaku MicroMax-002 beam generator (Cu K$\alpha$ $\lambda$= 0.1542 nm, operating voltage and current 45 kV and 0.65 mA, respectively) equipped with R-axis IV++ detector.

For the isothermal crystallization study (using a TA Instrument Q100 DSC), samples were heated to 220 °C at a heating rate of 10 °C/min and held at 220 °C for 5 min. These samples were then cooled at a rate of 100 °C/min to 135 °C and then held at that temperature for crystallization. The crystallization half-time, $t_{1/2}$ is defined as the time at which the extent of crystallization is 50% of total crystallization. The crystallization half-time can be calculated from the total crystallinity according to equation (1):

$$(X_t) = \int_0^t (dH_c/dt)\,dt / \int_0^\infty (dH_c/dt)\,dt \qquad (1)$$

wherein t is the crystallization time and $dH_c / dt$ is the heat evolution rate during the crystallization process. For non-isothermal crystallization studies, samples were heated by differential scanning calorimetry (DSC) at 2.5 °C/min from room temperature to 220 °C and then cooled at the same rate to room temperature and then heated again at 2.5 °C/min to 220 °C. Crystallization temperature ($T_c$) was derived from the cooling cycle.

Impact-fractured surfaces of polypropylene-coated multiwall carbon nanotubes (PP/MWNT) nanocomposite containing 1 wt.% MWNT were investigated by scanning electron microscopy (SEM) using Zeiss Ultra 60 FE-SEM at an accelerating voltage of 2 kV. A thin layer of gold was sputter coated onto these samples before imaging. SEM studies were also conducted on etched surfaces. For etching, impact fractured specimens were placed in a vial containing a 60:40 mixture of orthophosphoric acid ($H_3PO_4$) and sulfuric acid ($H_2SO_4$) with approximately 0.5 wt.% potassium permanganate ($KMnO_4$). Etching was carried out in the vials in an ultrasonic bath for 2 hours at room temperature. After the etching treatment, samples were repeatedly washed in deionized water followed by washing in acetone. These samples were then dried in an oven for 1 hour at 40 °C.

To determine the statistical significance of the MWNT effect on properties, a Student's t test was performed on the data using JMP11 software at 95% confidence limit.

Rheological behavior was measured on an ARES rheometer (Rheometric Scientific Inc., USA) in the linear viscoelastic regime at a strain of 5%. Dynamic frequency sweep test was performed at 200 °C in the range of 0.1 to 500 rad/s using parallel-plate geometry (plate diameter 25 mm and the gap between the plates was 1 mm). Raman spectra (Horiba Explora One, λ= 785 nm) were collected to determine MWNT orientation using parallel (VV) and crossed (VH) polarizers, with the sample axis rotated in 10 degree increments from 0 to 90°. Equation (2) was used to determine CNT orientation, $f_{CNT}$:

$$R(\theta) = \frac{I_{VH}(\theta)}{I_{VV}(\theta)}$$

$$= \frac{(1-r)^2 [-56 - 40\,\langle P_{200}\rangle + (105\cos 4\theta - 9)\,\langle P_{400}\rangle]}{[-56(8r^2 + 4r + 3) + 40(4r^2 - r - 3)(1 + 3\cos 2\theta)\,\langle P_{200}\rangle - 3(r-1)^2(9 + 20\cos 2\theta + 35\cos 4\theta)\,\langle P_{400}\rangle]} \qquad (2)$$

Equation (2) was simultaneously solved for three variables (r, <P200> = $f_{CNT}$, and <P400>).

EXAMPLE 1

PP nanocomposites were prepared as follows. PP/MWNT nanocomposites were produced using master batch approach. As-received SMW200 MWNT were homogenized in deionized water at a concentration of 150 mg/dl for 20 minutes at 7000 rpm. 70% nitric acid was added to the mixture to make a final acid concentration of 10 M (40 mg/dl). MWNT-acid slurry (40 mg/dl) was sonicated for 30 minutes using Branson bath sonicator 3510R-MT (100 W, 42 kHz) maintained at 25 °C to 30 °C. The sonicated dispersion was refluxed at 120 °C for 24 hours. The resulting suspension was repeatedly centrifuged using deionized water until the pH of the suspension reached a neutral value in the range of 6 to 7. Then the final centrifugation cycle was carried out using butanol and the suspension was filtered using repeated butanol wash. The filtered functionalized nanotubes (f-MWNT) were dispersed at a concentration of 5 mg/dl in butanol using bath sonication for 48 hours. Generally, carboxyl groups (-COOH) can be introduced on a carbon nanotube surface through nitric acid treatment to promote its solubility in polar solvents such as butanol.

MA-g-PP or PP was dissolved in xylene (190 mg/dl) at 130 °C. The MA-g-PP or PP solution was then added drop by drop to the f-MWNT/butanol (5 mg/dl) dispersion kept at 55 °C to 60 °C. The ratio of butanol to xylene in the final mixture was 2:1. This dispersion, maintained at 55 °C to 60 °C and kept under continuous stirring, was dried under vacuum at ~100 mbar for approximately 48 hours to obtain a master batch containing 5 wt.% f-MWNT in PP or in MA-g-PP.

Master batches of MA-g-PP-coated functionalized multiwall carbon nanotubes (MA-g-PP/f-MWNT) and PP-coated functionalized multiwall carbon nanotubes (PP/f-MWNT) were diluted using homopolymer PP to prepare the corresponding nanocomposites. As received PP powder was dried in vacuum oven at 80 °C for about 4 hours prior to its use in melt processing. The MWNT concentrations in the nanocomposites were 0.001, 0.005, 0.01, 0.1, 0.3, 0.5 and 1 wt.%. Mixing the master batch powder with PP powder was carried out manually using a mortar and pestle. Samples with the above MWNT concentrations were also prepared from pristine MWNT (referred to as p-MWNT) by manually mixing using a mortar and pestle with the as received PP. p-MWNT refer to MWNT that have not been subjected to a step of chemical functionalization. Various physical mixtures were melt blended using a micro compounder followed by injection molding. In addition, to compare to the PP/f-MWNT master batch processing conditions, PP powder was solution processed by dissolving in butanol-xylene mixture followed by solvent evaporation as was done for PP/f-MWNT master batch processing, except in this case nanotubes were not used. For comparison, as received PP powder, and as received PP powder along with 1.9 and 19 wt.% solution processed PP were melt compounded and injection molded using the same protocol, as used for the various nanocomposites. 1.9 and 19 wt.% solution processed PP corresponds to the amount of solution processed PP in the 0.1 and 1 wt.% MWNT containing corresponding nanocomposites, respectively.

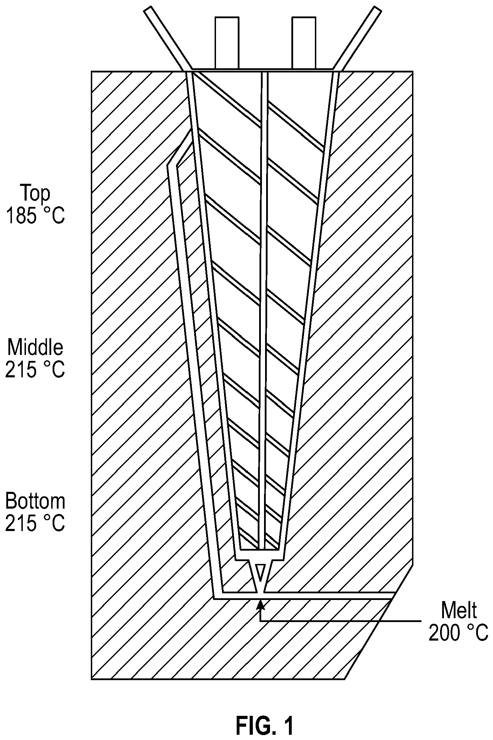

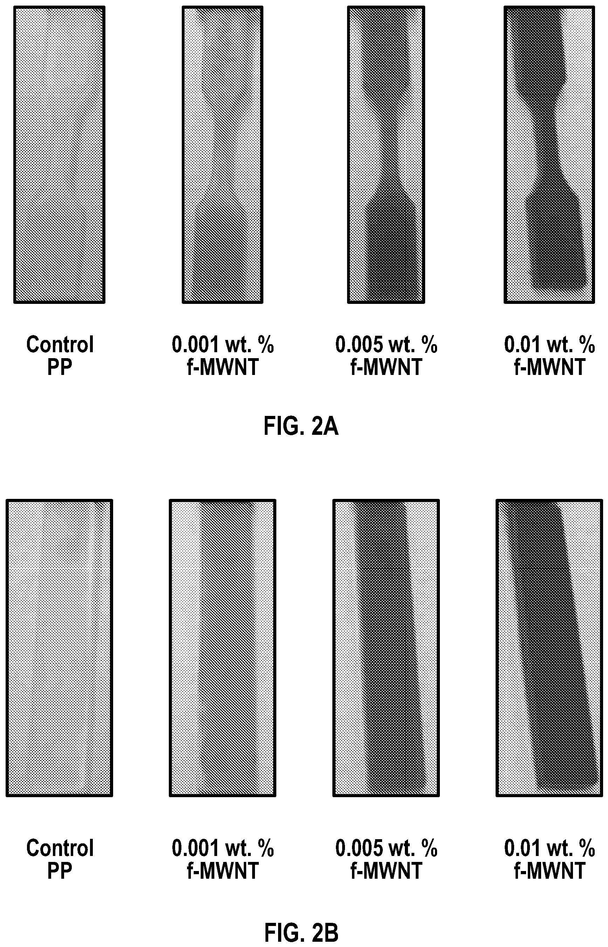

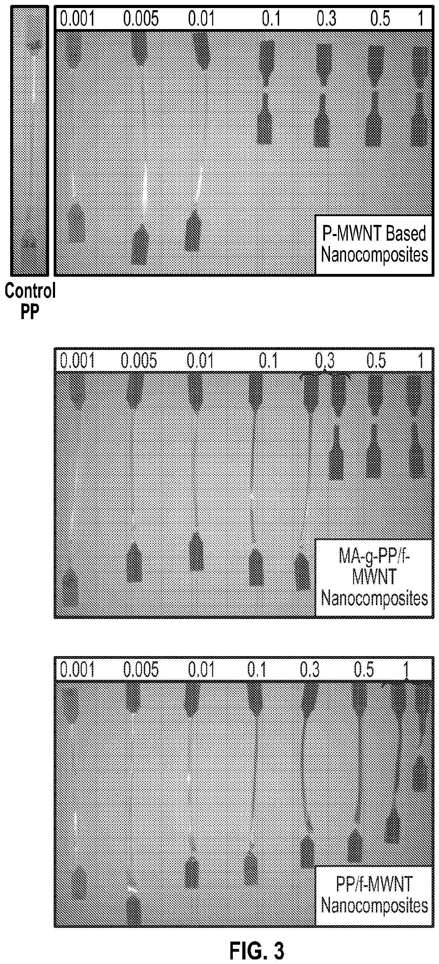

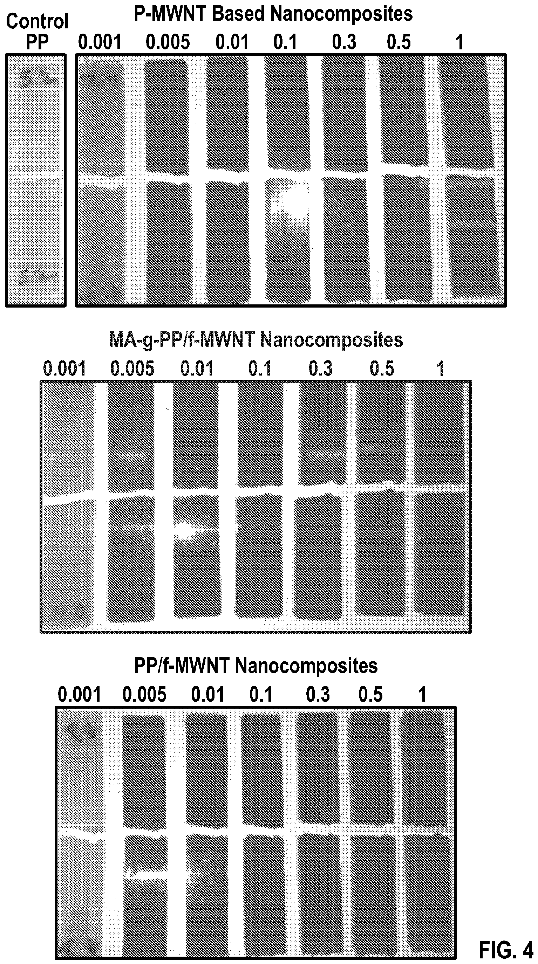

Dry blended PP/MWNT mixtures were fed to a 15 cc micro-compounder (Xplore Instruments, Netherlands). Compounding conditions for all the samples were kept the same. Temperatures of three heating zones of the barrel were set at 185 °C, 215 °C and 215 °C (Figure 1). Figure 1 displays a schematic of a micro-compounder showing the temperatures of the three heating zones of the barrel and the melt temperature in the exit zone. Melt temperatures were recorded by a thermocouple located after the third heating zone and before the die, and in all cases it was recorded as 200 °C. The micro-compounder was operated in recirculation mode for 3 minutes at 200 rpm. At the end of 3 minutes of recirculation, melt was transferred to the melt transfer device through a die with diameter of 3 mm. 12 cc melt transfer device was kept preheated to 200 °C. Subsequently melt transfer device was placed in the Xplore micro injection molding device. The mold was pre-heated at 80 °C. Pressure used for injection molding was 7.5 bar. Duration of injection molding cycles, feed-hold-release were 5-20-5 sec, respectively. Dog-bone shaped samples were prepared for tensile testing. Dimension of the tensile specimens are 63.5 X 3.27 X 3.33 mm. Rectangular bars were prepared for impact and heat deflection temperature testing. Dimensions of rectangular bars are 63.5 X 12.7 X 3.33 mm. Photographs of the various injection molded samples before and after tensile and impact test are shown in Figures 2A, 2B, 3 and 4. Figures 2A and 2B display photographs of (a) tensile and (b) impact bars prepared from control PP and various concentration of f-MWNT containing PP/f-MWNT nanocomposites before testing. In Figures 2A and 2B, samples with higher than 0.01 wt.% f-MWNT loading visually appear to be of similar darkness to that of the 0.01 wt.% f-MWNT samples. Figure 3 displays photographs of various samples (e.g., control and PP/f-MWNT nanocomposites) after tensile testing. Figure 4 displays photographs of various samples (e.g., control and PP/f-MWNT nanocomposites) after impact testing.

EXAMPLE 2

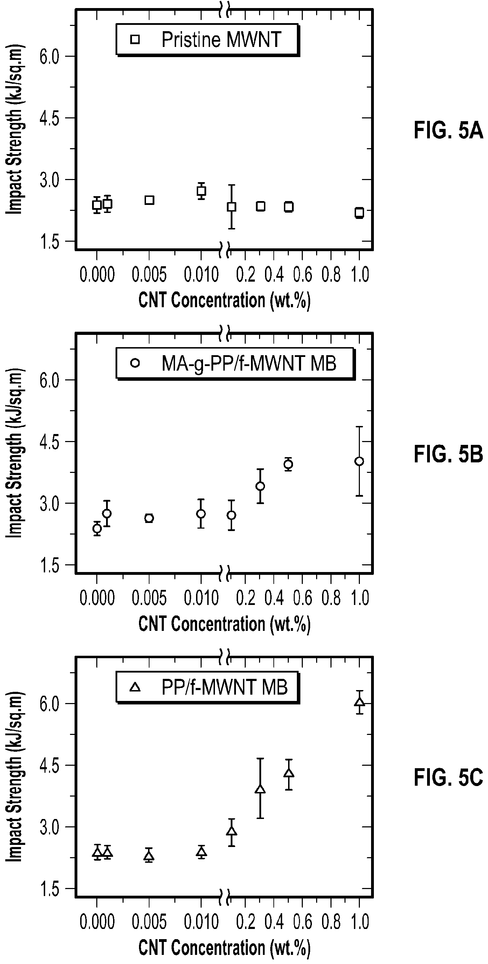

PP control samples and PP nanocomposite samples were prepared as described in Example 1 and were subjected to impact strength testing. Figures 5A to 5C show the impact strength of various samples as a function of carbon nanotube (CNT) (e.g., f-MWNT) loading and the corresponding data are given in Tables 1a, 1b, 1c, and 1d. Figures 5A to 5C show the Notched Izod impact strength of PP/MWNT nanocomposites prepared from (a) p-MWNT, (b) MA-g-PP/f-MWNT master batch (MB) and (c) PP/f-MWNT master batch. Tables 1 display (a) Notched Izod impact strength data and (b-d) statistical significance of the data of PP/MWNT nanocomposites prepared from p-MWNT, MA-g-PP/f-MWNT master batch and PP/f-MWNT master batch. Table 1b displays P-values showing the statistical significance of the impact strength data of Table 1a of nanocomposites prepared from p-MWNT. Table 1c displays P-values showing the statistical significance of the impact strength data of Table 1a of nanocomposites prepared from MA-g-PP/f-MWNT master batch. Table 1d displays P-values showing the statistical significance of the impact strength data of Table 1a of nanocomposites prepared from PP/f-MWNT master batch. P-values smaller than 0.05 in Tables 1b-d are considered statistically significant.

Table 1a

| MWNT concentration (wt. %) | Nanocomposites via p-MWNT | | Nanocomposites via MAg-PP/f-MWNT MB | | Nanocomposites via PP/f-MWNT MB | |
|---|---|---|---|---|---|---|
| | Impact strength (kJ/sq. m) | SD | Impact strength (kJ/sq. m) | SD | Impact strength (kJ/sq. m) | SD |
| 0 | 2.39 | 0.18 | 2.39 | 0.18 | 2.39 | 0.18 |
| 0.001 | 2.42 | 0.19 | 2.76 | 0.31 | 2.39 | 0.16 |
| 0.005 | 2.51 | 0.09 | 2.65 | 0.08 | 2.31 | 0.17 |
| 0.01 | 2.72 | 0.17 | 2.76 | 0.33 | 2.39 | 0.16 |

(continued)

| MWNT concentration (wt. %) | Nanocomposites via p-MWNT | | Nanocomposites via MAg-PP/f-MWNT MB | | Nanocomposites via PP/f-MWNT MB | |
|---|---|---|---|---|---|---|
| | Impact strength (kJ/sq. m) | SD | Impact strength (kJ/sq. m) | SD | Impact strength (kJ/sq. m) | SD |
| 0.1 | 2.33 | 0.58 | 2.72 | 0.36 | 2.87 | 0.34 |
| 0.3 | 2.34 | 0.10 | 3.43 | 0.41 | 3.95 | 0.73 |
| 0.5 | 2.34 | 0.10 | 3.95 | 0.16 | 4.29 | 0.37 |
| 1 | 2.20 | 0.08 | 4.03 | 0.85 | 6.04 | 0.28 |

Table 1b

| MWNT concentration (wt. %) | 0.001 | 0.005 | 0.01 | 0.1 | 0.3 | 0.5 | 1 |
|---|---|---|---|---|---|---|---|
| 0 | 1.00 | 0.53 | 0.04 | 0.53 | 0.59 | 0.59 | 0.12 |
| 0.001 | X | 0.53 | 0.04 | 0.53 | 0.59 | 0.59 | 0.12 |
| 0.005 | | X | 0.14 | 0.23 | 0.25 | 0.25 | 0.03 |
| 0.01 | | | X | 0.01 | 0.01 | 0.01 | 0.001 |
| 0.1 | | | | X | 0.90 | 0.90 | 0.40 |
| 0.3 | | | | | X | 1.00 | 0.30 |
| 0.5 | | | | | | X | 0.30 |

Table 1c

| MWNT concentration (wt. %) | 0.001 | 0.005 | 0.01 | 0.1 | 0.3 | 0.5 | 1 |
|---|---|---|---|---|---|---|---|
| 0 | 0.20 | 0.39 | 0.19 | 0.25 | 0.0004 | <0.0001 | <0.0001 |
| 0.001 | X | 0.67 | 0.99 | 0.89 | 0.0125 | <0.0001 | <0.0001 |
| 0.005 | | X | 0.66 | 0.77 | 0.0042 | <0.0001 | <0.0001 |
| 0.01 | | | X | 0.88 | 0.0127 | <0.0001 | <0.0001 |
| 0.1 | | | | X | 0.0088 | <0.0001 | <0.0001 |
| 0.3 | | | | | X | 0.05 | 0.0261 |
| 0.5 | | | | | | X | 0.77 |

Table 1d

| MWNT concentration (wt. %) | 0.001 | 0.005 | 0.01 | 0.1 | 0.3 | 0.5 | 1 |
|---|---|---|---|---|---|---|---|
| 0 | 0.86 | 0.62 | 0.86 | 0.05 | <0.0001 | <0.0001 | <0.0001 |
| 0.001 | X | 0.75 | 1.00 | 0.0352 | <0.0001 | <0.0001 | <0.0001 |
| 0.005 | | X | 0.75 | 0.0167 | <0.0001 | <0.0001 | <0.0001 |
| 0.01 | | | X | 0.0352 | <0.0001 | <0.0001 | <0.0001 |
| 0.1 | | | | X | <0.0001 | <0.0001 | <0.0001 |
| 0.3 | | | | | X | 0.1413 | <0.0001 |

(continued)

| | | | | | | | |
|---|---|---|---|---|---|---|---|
| 0.5 | | | | | | X | <0.0001 |

At 0.01 wt.% p-MWNT loading, the impact strength increased by 13.8%, and the p-value test showed that this increase was statistically significant. However, further increase in p-MWNT loading to 0.5 wt. %, decreased the impact strength of the nanocomposites to the level of the control PP, and at 1 wt.% p-MWNT, impact strength value was lower than that of the control PP. Previous studies have shown an increase of 56% and 47% in impact strength of polypropylene-coated carbon nanotubes (PP/CNT) nanocomposites produced by melt processing for 1 wt.% and at 0.6 wt.% CNT loadings, respectively, as well as an impact strength decrease at higher CNT concentrations of 1.5 wt.% and 1 wt.%.

Impact strength for MA-g-PP/f-MWNT master batch based nanocomposites showed statistically significant difference at f-MWNT concentration of 0.3 wt.% or higher. At 0.5 and 1 wt.% f-MWNT, impact strength values were 3.95 and 4.03 kJ/m$^2$, and these represent an increase of 65% and 69%, respectively, over that of the control PP. PP/f-MWNT master batch containing samples showed statistically significant difference at or above 0.1 wt.% f-MWNT, and at 1 wt.% f-MWNT, impact strength was 6.04 kJ/m$^2$. This is an increase of 152% over the control PP sample.

EXAMPLE 3

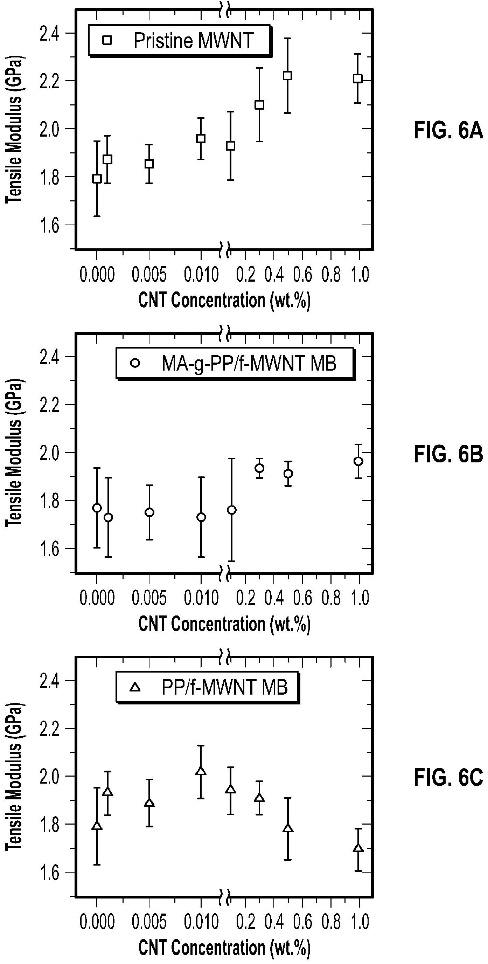

PP control samples and PP nanocomposite samples were prepared as described in Example 1 and were subjected to tensile testing. The tensile modulus values are presented in Figures 6A to 6C and Tables 2. Figures 6A to 6C show the tensile modulus of PP/MWNT nanocomposites prepared from (a) p-MWNT, (b) MA-g-PP/f-MWNT master batch and (c) PP/f-MWNT master batch. Tables 2 display (a) tensile modulus data and (b-d) statistical significance of the data of PP/MWNT nanocomposites prepared from p-MWNT, MA-g-PP/f-MWNT master batch and PP/f-MWNT master batch. Table 2b displays P-values showing the statistical significance of the tensile modulus data of Table 2a of nanocomposites prepared from p-MWNT. Table 2c displays P-values showing the statistical significance of the tensile modulus data of Table 2a of nanocomposites prepared from MA-g-PP/f-MWNT master batch. Table 2d displays P-values showing the statistical significance of the tensile modulus data of Table 2a of nanocomposites prepared from PP/f-MWNT master batch. P-values smaller than 0.05 in Tables 2b-d are considered statistically significant.

Table 2a

| MWNT concentration (wt. %) | Nanocomposites via p-MWNT | | Nanocomposites via MA-g-PP/f-MWNT MB | | Nanocomposites via PP/f-MWNT master batch | |
|---|---|---|---|---|---|---|
| | Tensile modulus (GPa) | SD | Tensile modulus (GPa) | SD | Tensile modulus (GPa) | SD |
| 0 | 1.79 | 0.16 | 1.79 | 0.16 | 1.79 | 0.16 |
| 0.001 | 1.87 | 0.1 | 1.75 | 0.16 | 1.93 | 0.09 |
| 0.005 | 1.85 | 0.08 | 1.77 | 0.11 | 1.89 | 0.1 |
| 0.01 | 1.96 | 0.09 | 1.75 | 0.16 | 2.02 | 0.11 |
| 0.1 | 1.93 | 0.14 | 1.78 | 0.21 | 1.94 | 0.1 |
| 0.3 | 2.1 | 0.15 | 1.95 | 0.04 | 1.91 | 0.07 |
| 0.5 | 2.22 | 0.16 | 1.93 | 0.05 | 1.78 | 0.13 |
| 1 | 2.21 | 0.1 | 1.98 | 0.07 | 1.69 | 0.09 |

Table 2b

| MWNT concentration (wt. %) | 0.001 | 0.005 | 0.01 | 0.1 | 0.3 | 0.5 | 1 |
|---|---|---|---|---|---|---|---|
| 0 | 0.30 | 0.45 | 0.0197 | 0.05 | <0.0001 | <0.0001 | <0.0001 |
| 0.001 | X | 0.81 | 0.28 | 0.46 | 0.0106 | 0.0002 | 0.0002 |
| 0.005 | | X | 0.19 | 0.34 | 0.0058 | <0.0001 | 0.0001 |
| 0.01 | | | X | 0.73 | 0.12 | 0.0040 | 0.0054 |

(continued)

| 0.1 | | | | X | 0.06 | 0.0015 | 0.0021 |
| 0.3 | | | | | X | 0.15 | 0.19 |
| 0.5 | | | | | | X | 0.91 |

Table 2c

| MWNT concentration (wt. %) | 0.001 | 0.005 | 0.01 | 0.1 | 0.3 | 0.5 | 1 |
|---|---|---|---|---|---|---|---|
| 0 | 0.55 | 0.73 | 0.55 | 0.83 | 0.0359 | 0.06 | 0.0096 |
| 0.001 | X | 0.84 | 1.00 | 0.79 | 0.0332 | 0.05 | 0.0117 |
| 0.005 | | X | 0.84 | 0.94 | 0.05 | 0.08 | 0.0194 |
| 0.01 | | | X | 0.79 | 0.0332 | 0.05 | 0.0117 |
| 0.1 | | | | X | 0.08 | 0.12 | 0.0326 |
| 0.3 | | | | | X | 0.82 | 0.67 |
| 0.5 | | | | | | X | 0.5 |

Table 2d

| MWNT concentration (wt. %) | 0.001 | 0.005 | 0.01 | 0.1 | 0.3 | 0.5 | 1 |
|---|---|---|---|---|---|---|---|
| 0 | 0.0329 | 0.12 | 0.0009 | 0.0283 | 0.07 | 0.82 | 0.09 |
| 0.001 | X | 0.63 | 0.29 | 0.96 | 0.78 | 0.06 | 0.0031 |
| 0.005 | | X | 0.13 | 0.59 | 0.84 | 0.15 | 0.0113 |
| 0.01 | | | X | 0.32 | 0.18 | 0.0044 | 0.0001 |
| 0.1 | | | | X | 0.74 | 0.05 | 0.0027 |
| 0.3 | | | | | X | 0.11 | 0.0067 |
| 0.5 | | | | | | X | 0.24 |

Tensile modulus of the PP/p-MWNT composites increased gradually until about 0.5 wt.% MWNT content in the composite. At 0.5 wt.% p-MWNT, the tensile modulus of the composite increased by 24% as compared to the control PP sample. An increase in p-MWNT loading to 1 wt.% had no further effect on the tensile modulus. In MA-g-PP/f-MWNT MB based samples, at low f-MWNT loadings (0.001 to 0.1 wt.%), tensile moduli of the nanocomposites were comparable to the control samples. About 10% increase in tensile modulus of the nanocomposites containing 0.3 wt.% f-MWNT was observed as compared to the control sample. However, no further enhancement in the tensile modulus of the nanocomposites containing up to 1 wt.% f-MWNT was seen. In PP/f-MWNT MB based nanocomposites, an increase of 8 and 13% in the tensile modulus was observed at 0.001 and 0.01 wt.% f-MWNT loading, respectively, as compared to the control PP. With further increase in f-MWNT loading up to 1 wt.%, the modulus values decreased. Among the three types of nanocomposites, PP/f-MWNT MB based nanocomposites showed the highest tensile modulus at low MWNT loadings of 0.001 and 0.01 wt.%. PP/p-MWNT composites exhibited the highest tensile modulus in the MWNT loading range of 0.3 to 1 wt.%, when compared to the MA-g-PP/f-MWNT and PP/f-MWNT composites.

EXAMPLE 4

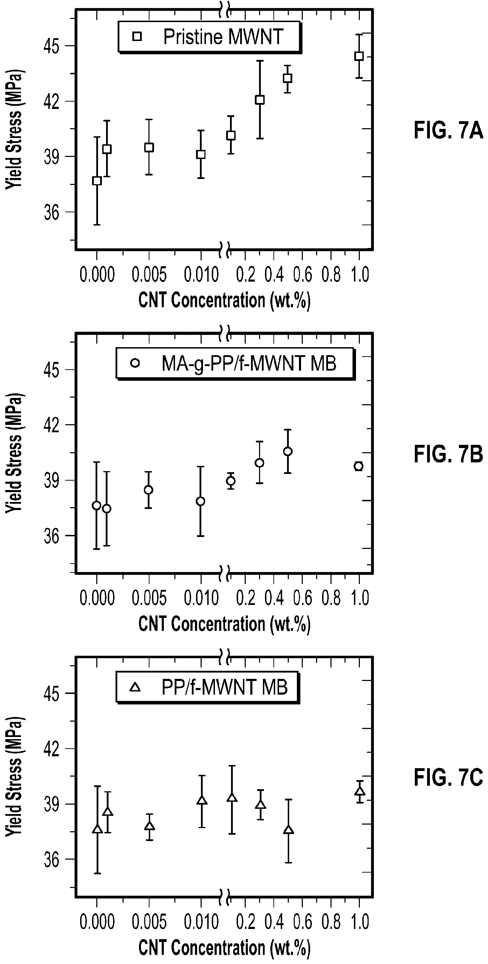

PP control samples and PP nanocomposite samples were prepared as described in Example 1 and were subjected to yield stress testing. The yield stress data are presented in Figures 7A to 7C and Tables 3. Figures 7A to 7C show yield stress of PP/MWNT nanocomposites prepared from (a) p-MWNT, (b) MA-g-PP/f-MWNT master batch and (c) PP/f-MWNT master batch. Tables 3 display (a) yield stress data and (b-d) statistical significance of the data of PP/MWNT nanocomposites prepared from p-MWNT, MA-g-PP/f-MWNT master batch and PP/f-MWNT master batch.

Table 3b displays P-values showing the statistical significance of the yield stress data of Table 3a of nanocomposites prepared from p-MWNT. Table 3c displays P-values showing the statistical significance of the yield stress data of Table 3a of nanocomposites prepared from MA-g-PP/f-MWNT MB. Table 3d displays P-values showing the statistical significance of the yield stress data of Table 3a of nanocomposites prepared from PP/f-MWNT MB. P-values less than 0.05 in Tables 3b-d are considered statistically significant.

Table 3a

| MWNT concentration (wt. %) | Nanocomposites via p-MWNT | | Nanocomposites via MA-g-PP/f-MWNT MB | | Nanocomposites via PP/f-MWNT MB | |
|---|---|---|---|---|---|---|
| | Yield stress (MPa) | SD | Yield stress (MPa) | SD | Yield stress (MPa) | SD |
| 0 | 37.7 | 2.4 | 37.7 | 2.4 | 37.7 | 2.4 |
| 0.001 | 39.4 | 1.5 | 37.5 | 2 | 38.6 | 1.1 |
| 0.005 | 39.5 | 1.5 | 38.5 | 1 | 37.8 | 0.7 |
| 0.01 | 39.1 | 1.3 | 37.9 | 1.9 | 39.2 | 1.4 |
| 0.1 | 40.1 | 1.1 | 39 | 0.4 | 39.3 | 1.8 |
| 0.3 | 42.1 | 2.1 | 40 | 1.1 | 39 | 0.8 |
| 0.5 | 43.2 | 0.7 | 40.6 | 1.2 | 37.6 | 1.7 |
| 1 | 44.4 | 1.2 | 39.8 | 0.2 | 39.7 | 0.6 |

Table 3b

| MWNT concentration (wt. %) | 0.001 | 0.005 | 0.01 | 0.1 | 0.3 | 0.5 | 1 |
|---|---|---|---|---|---|---|---|
| 0 | 0.06 | 0.06 | 0.12 | 0.0467 | <0.0001 | <0.0001 | <0.0001 |
| 0.001 | X | 0.97 | 0.80 | 0.80 | 0.0280 | 0.0025 | 0.0001 |
| 0.005 | | X | 0.77 | 0.83 | 0.0303 | 0.0028 | 0.0001 |
| 0.01 | | | X | 0.63 | 0.0152 | 0.0012 | <0.0001 |
| 0.1 | | | | X | 0.07 | 0.0081 | 0.0005 |
| 0.3 | | | | | X | 0.36 | 0.06 |
| 0.5 | | | | | | X | 0.31 |

Table 3c

| MWNT concentration (wt. %) | 0.001 | 0.005 | 0.01 | 0.1 | 0.3 | 0.5 | 1 |
|---|---|---|---|---|---|---|---|
| 0 | 0.90 | 0.33 | 0.84 | 0.19 | 0.0146 | 0.0027 | 0.0202 |
| 0.001 | X | 0.39 | 0.79 | 0.24 | 0.0398 | 0.0118 | 0.05 |
| 0.005 | | X | 0.54 | 0.72 | 0.22 | 0.09 | 0.26 |
| 0.01 | | | X | 0.35 | 0.07 | 0.0225 | 0.08 |
| 0.1 | | | | X | 0.42 | 0.20 | 0.47 |
| 0.3 | | | | | X | 0.61 | 0.91 |
| 0.5 | | | | | | X | 0.54 |

Table 3d

| MWNT concentration (wt. %) | 0.001 | 0.005 | 0.01 | 0.1 | 0.3 | 0.5 | 1 |
|---|---|---|---|---|---|---|---|
| 0 | 0.90 | 0.33 | 0.84 | 0.19 | 0.0146 | 0.0027 | 0.0202 |
| 0.001 | X | 0.39 | 0.79 | 0.24 | 0.0398 | 0.0118 | 0.05 |
| 0.005 | | X | 0.54 | 0.72 | 0.22 | 0.09 | 0.26 |
| 0.01 | | | X | 0.35 | 0.07 | 0.0225 | 0.08 |
| 0.1 | | | | X | 0.42 | 0.20 | 0.47 |
| 0.3 | | | | | X | 0.61 | 0.91 |
| 0.5 | | | | | | X | 0.54 |

For the p-MWNT based nanocomposites, yield stress increased gradually with the increase in MWNT concentration and reached the highest value (among the three types of composites in the current study) of 44.4 MPa at 1 wt.% MWNT loading. This was an 18% increase over the control PP. A statistically significant difference in yield stress was observed at as low as 0.1 wt.% for p-MWNT, at 0.3 wt.% for MA-g-PP/f-MWNT based samples, and at 1 wt.% for PP/f-MWNT based samples. At 0.5% CNT, yield stress of MA-g-PP/f-MWNT based nanocomposite increased by 8% compared to that of the control PP. For the PP/f-MWNT based nanocomposite, the increase in yield stress compared to that of the control PP was 5% at 1 wt.% CNT loading.

EXAMPLE 5

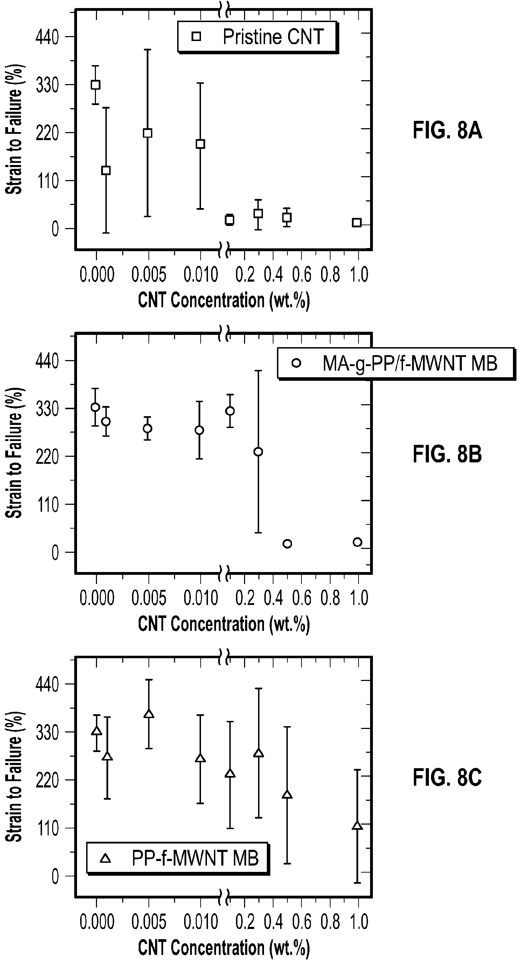

PP control samples and PP nanocomposite samples were prepared as described in Example 1 and were subjected to strain to failure (STF) testing. The strain to failure data are presented in Figures 8A to 8C and Tables 4. Figures 8A to 8C show strain to failure of PP/MWNT nanocomposites prepared from (a) p-MWNT, (b) MA-g-PP/f-MWNT master batch and (c) PP/f-MWNT master batch. Tables 4 display (a) strain to failure data and (b-d) statistical significance of the data of PP/MWNT nanocomposites prepared from p-MWNT, MA-g-PP/f-MWNT master batch and PP/f-MWNT master batch. Table 4b displays P-values showing the statistical significance of the strain to failure data of Table 4a of nanocomposites prepared from p-MWNT. Table 4c displays P-values showing the statistical significance of the strain to failure data of Table 4a of nanocomposites prepared from MA-g-PP/f-MWNT master batch. Table 4d displays P-values showing the statistical significance of the strain to failure data of Table 4a of nanocomposites prepared from PP/f-MWNT master batch. P-values smaller than 0.05 in Tables 4b-d are considered statistically significant.

Table 4a

| MWNT concentration (wt.%) | Nanocomposites via p-MWNT | | Nanocomposites via MA-g-PP/f-MWNT MB | | Nanocomposites via PP/f-MWNT MB | |
|---|---|---|---|---|---|---|
| | STF(%) | SD | STF(%) | SD | STF(%) | SD |
| 0 | 328.9 | 42.9 | 328.9 | 42.9 | 328.9 | 42.9 |
| 0.001 | 133 | 143.7 | 296.7 | 33.4 | 273.2 | 92.2 |
| 0.005 | 218.2 | 191.1 | 282.1 | 25 | 369.7 | 78.9 |
| 0.01 | 190.2 | 144.9 | 277.1 | 65.1 | 268 | 102 |
| 0.1 | 17.7 | 12.3 | 321.3 | 37.9 | 232.8 | 121.2 |
| 0.3 | 30.6 | 35.1 | 226 | 189.3 | 280.1 | 149.2 |
| 0.5 | 25.1 | 20.8 | 16.8 | 2.9 | 185.9 | 154.9 |
| 1 | 12.5 | 1.1 | 19.9 | 4.7 | 113.4 | 130.9 |

Table 4b

| MWNT concentration (wt.%) | 0.001 | 0.005 | 0.01 | 0.1 | 0.3 | 0.5 | 1 |
|---|---|---|---|---|---|---|---|
| 0 | 0.0002 | 0.0253 | 0.0058 | <0.0001 | <0.0001 | <0.0001 | <0.0001 |

(continued)

| | | | | | | | |
|---|---|---|---|---|---|---|---|
| 0.001 | X | 0.15 | 0.33 | 0.05 | 0.08 | 0.07 | 0.0437 |
| 0.005 | | X | 0.63 | 0.0013 | 0.0024 | 0.0018 | 0.0010 |
| 0.01 | | | X | 0.0048 | 0.0087 | 0.0068 | 0.0038 |
| 0.1 | | | | X | 0.82 | 0.90 | 0.93 |
| 0.3 | | | | | X | 0.92 | 0.76 |
| 0.5 | | | | | | X | 0.83 |

Table 4c

| MWNT concentration (wt. %) | 0.001 | 0.005 | 0.01 | 0.1 | 0.3 | 0.5 | 1 |
|---|---|---|---|---|---|---|---|
| 0 | 0.38 | 0.20 | 0.16 | 0.83 | 0.0068 | <0.0001 | <0.0001 |
| 0.001 | X | 0.74 | 0.66 | 0.58 | 0.11 | <0.0001 | <0.0001 |
| 0.005 | | X | 0.91 | 0.38 | 0.21 | <0.0001 | <0.0001 |
| 0.01 | | | X | 0.32 | 0.25 | <0.0001 | <0.0001 |
| 0.1 | | | | X | 0.0354 | <0.0001 | <0.0001 |
| 0.3 | | | | | X | <0.0001 | <0.0001 |
| 0.5 | | | | | | X | 0.94 |

Table 4d

| MWNT concentration (wt. %) | 0.001 | 0.005 | 0.01 | 0.1 | 0.3 | 0.5 | 1 |
|---|---|---|---|---|---|---|---|
| 0 | 0.31 | 0.45 | 0.26 | 0.08 | 0.37 | 0.0110S | 0.0003 |
| 0.001 | X | 0.15 | 0.93 | 0.54 | 0.91 | 0.19 | 0.0187 |
| 0.005 | | X | 0.13 | 0.0422 | 0.18 | 0.0074 | 0.0003 |
| 0.01 | | | X | 0.59 | 0.85 | 0.22 | 0.0226 |
| 0.1 | | | | X | 0.47 | 0.47 | 0.07 |
| 0.3 | | | | | X | 0.16 | 0.0144 |
| 0.5 | | | | | | X | 0.27 |

Control PP sample showed ductile behavior with a strain to failure value of 329%. In p-MWNT based nanocomposites, strain to failure dropped to 12.5% at 1 wt.% p-MWNT loading. Strain to failure decreased with statistically significant difference to below 218% even with p-MWNT loading in the range of 0.001 to 0.01 wt.%. At 0.1 wt.% p-MWNT, strain to failure decreased to 17.7%. Further, for MA-g-PP/f-MWNT based nanocomposites, good to excellent strain to failure was retained even at 0.3 wt.% f-MWNT. However, in going from 0.3 wt.% to 0.5 wt.% f-MWNT, strain to failure decreased from 226% to 16.8%. PP/f-MWNT based nanocomposite samples exhibited the best ductile behavior amongst the three categories of nanocomposite samples investigated. The strain to failure of 1 wt.% MWNT containing PP/f-MWNT based nanocomposite was 113% compared to 12.5% and 19.9% for p-MWNT based and MA-g-PP/f-MWNT based nanocomposites, respectively.

EXAMPLE 6

PP control samples and PP nanocomposite samples were prepared as described in Example 1 and were investigated for changes in mechanical properties, structure, morphology, and crystallization behavior.

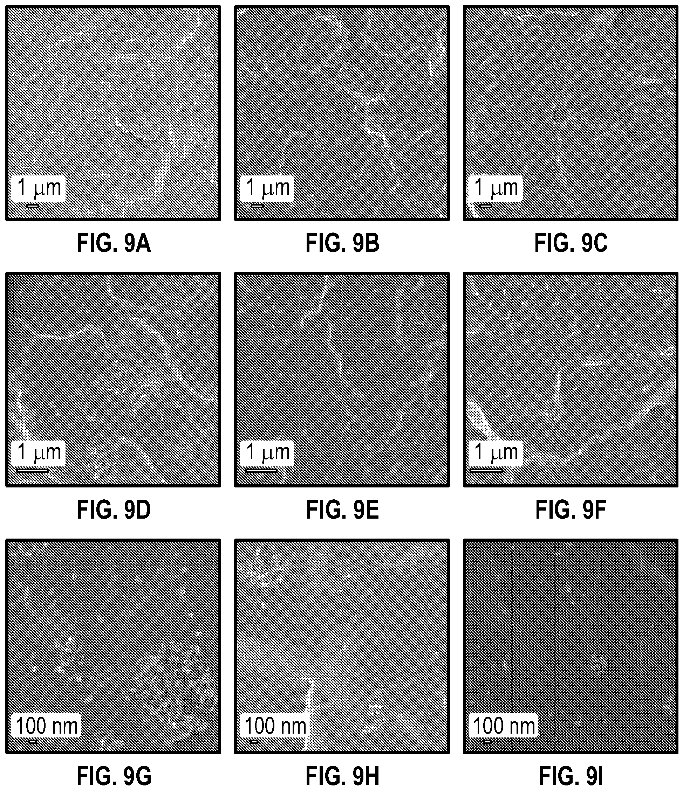

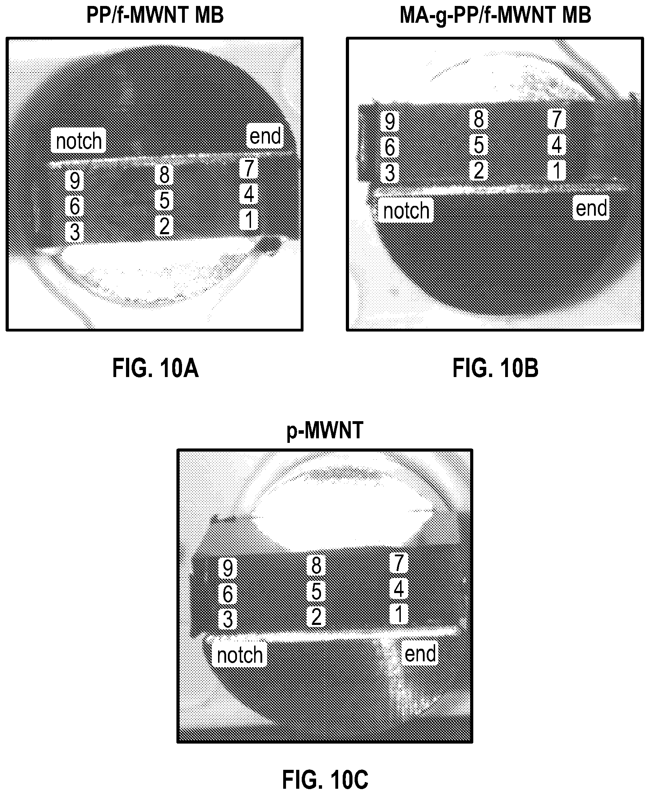

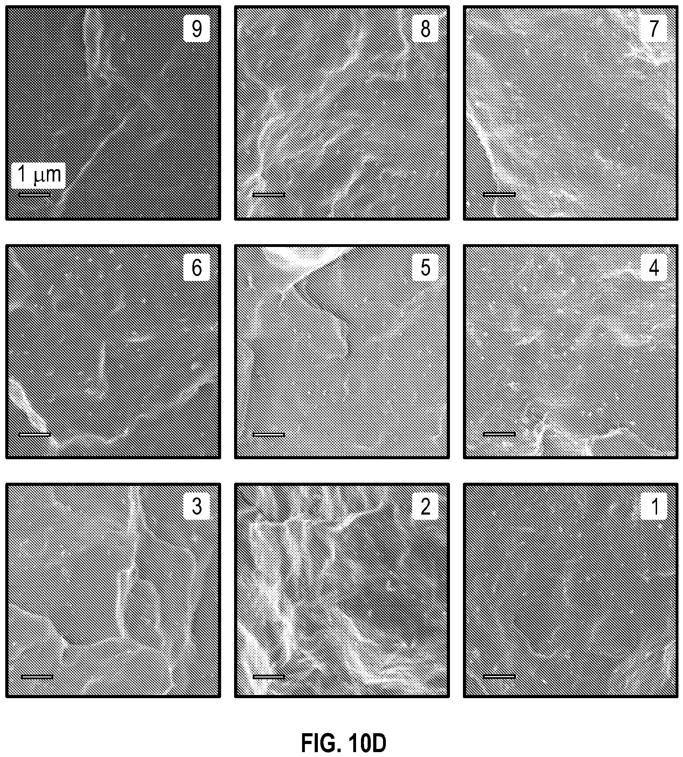

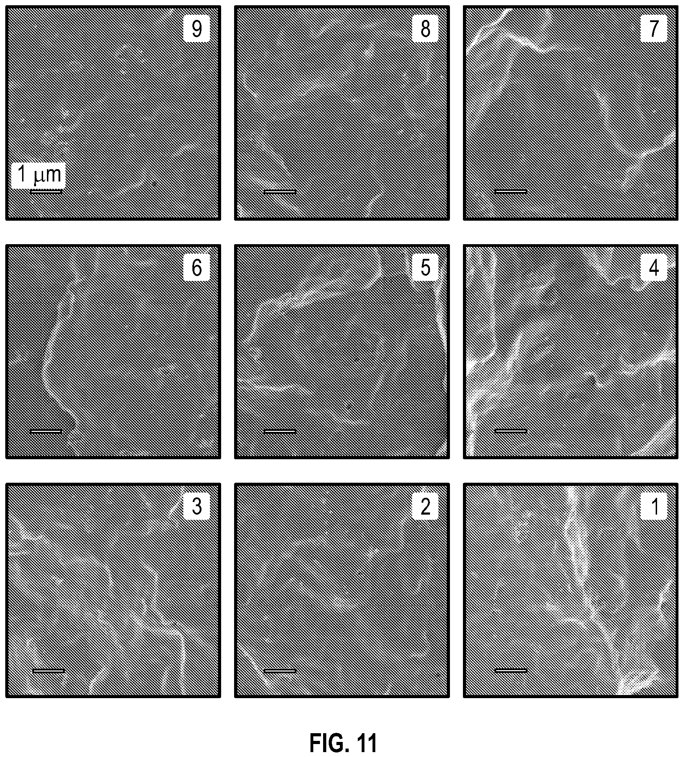

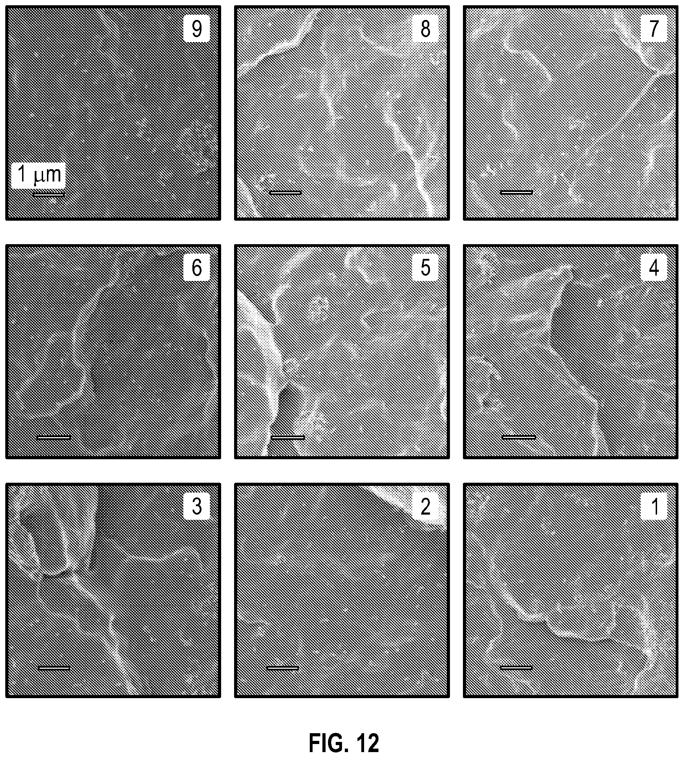

Figures 10A, 10B, and 10C display photographs of the impact fractured specimens, wherein numbers (1 to 9) refer to regions from which SEM images were obtained as reported in Figures 10D, 11, 26A to 26E, 27A to 27C, 28, and 29, to assess morphological differences in the fracture surfaces near the notch vs. away from the notch in the three types of nanocomposites. In Izod impact strength tested samples, no nanotube pull out was observed, and all nanotubes appear to be broken due to fracture (Figures 9A to 9I, 10D, 11, and 12). Figures 9A to 9I show SEM images of PP/MWNT (1 wt.%) nanocomposites impact-fractured surface prepared from (a,d,g) p-MWNT, (b,e,h) MA-g-PP/f-MWNT master batch, and (c,f,i) PP/f-MWNT master batch before etching. Figure 10D displays SEM mapping of PP/f-MWNT nanocomposite (at 1 wt.% MWNT) impact-fractured surface prepared from PP/f-MWNT master batch, showing that well dispersed f-MWNT were broken instead of pulled out. In Figure 10D, scale bars represent 1 $\mu$m. Figure 11 displays SEM mapping of PP/MWNT nanocomposites (at 1 wt.% MWNT) impact-fractured surface prepared from MA-g-PP/f-MWNT master batch; scale bars represent 1 $\mu$m. In Figure 11, small pocket of f-MWNT (0.5 to 1 $\mu$m size) along with individual f-MWNT can be observed. Figure 12 displays SEM mapping of PP/MWNT nanocomposites (at 1 wt.% MWNT) impact-fractured surface prepared from p-MWNT; scale bars represent 1 $\mu$m. In Figure 12, both individual p-MWNT and p-MWNT aggregates were observed.

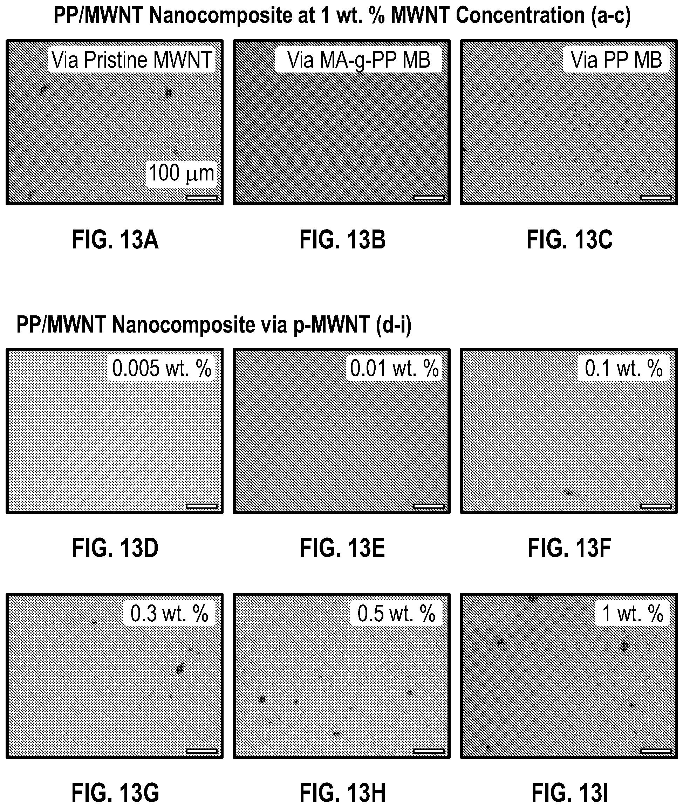

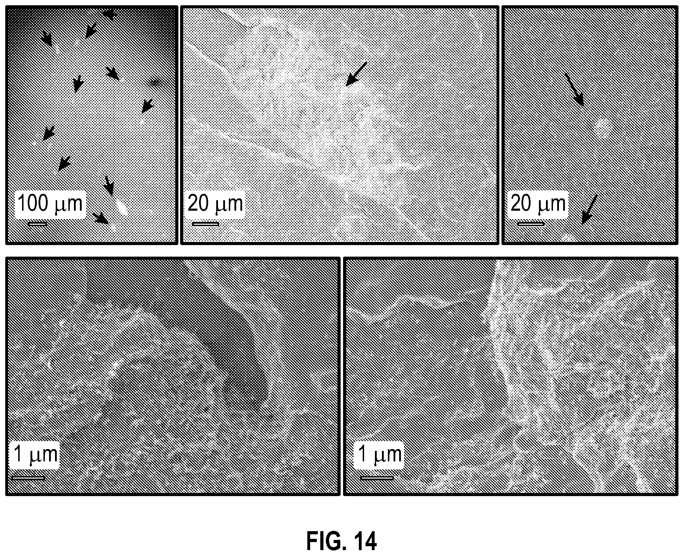

At 1 wt. % MWNT concentration, optical and scanning electron microscopies show that MWNT dispersion was relatively poor in p-MWNT sample (Figure 9A to 9I, Figure 12, Figures 13A to 13I and Figure 14). Figures 13A to 13I display (a-c) optical micrographs at 1 wt.% MWNT showing dispersion quality in the three type of nanocomposites; (d-i) optical micrographs of nanocomposites formed from p-MWNT at different MWNT concentrations; scale bar represents 100 $\mu$m. Figure 14 displays SEM images of fractured surfaces of PP/p-MWNT nanocomposites at 1 wt.% p-MWNT after impact test, indicating the presence of individual nanotubes as well as nanotube aggregates of various dimensions (from few $\mu$m to over 100 $\mu$m).

Optical micrographs (Figures 13A to 13I) of the p-MWNT containing sample showed the presence of relatively large MWNT agglomerates above 0.1 wt.% p-MWNT loading. The impact strength of p-MWNT based nanocomposites (Figure 5A) suddenly dropped from 2.72 kJ/m$^2$ at 0.01 wt.% MWNT to 2.33 kJ/m$^2$ at 0.1 wt.% p-MWNT. This reduction in impact strength was consistent with the reduction of strain to failure (Figure 8A) due of the presence of p-MWNT aggregates. Without wishing to be limited by theory, the decrease in strain to failure in the nanocomposites can be due to the restricted polymer chains and the entangled and/or agglomerated MWNT that are not getting aligned during stretching, and can be due to poor interaction between MWNT and the polymer. Further, without wishing to be limited by theory, significantly higher elongation at break in the PP/f-MWNT based sample as compared to the other two types of nanocomposites can be attributed to good MWNT dispersion, as well as good PP/MWNT interaction. These data further suggest that PP/MWNT interaction is better in PP/f-MWNT based samples than in MA-g-PP/f-MWNT based sample and in PP/p-MWNT.

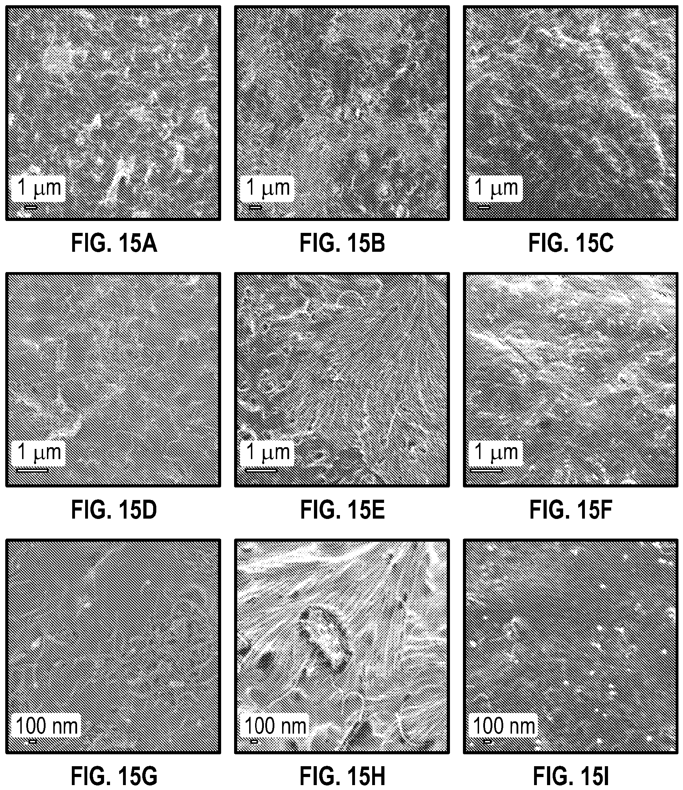

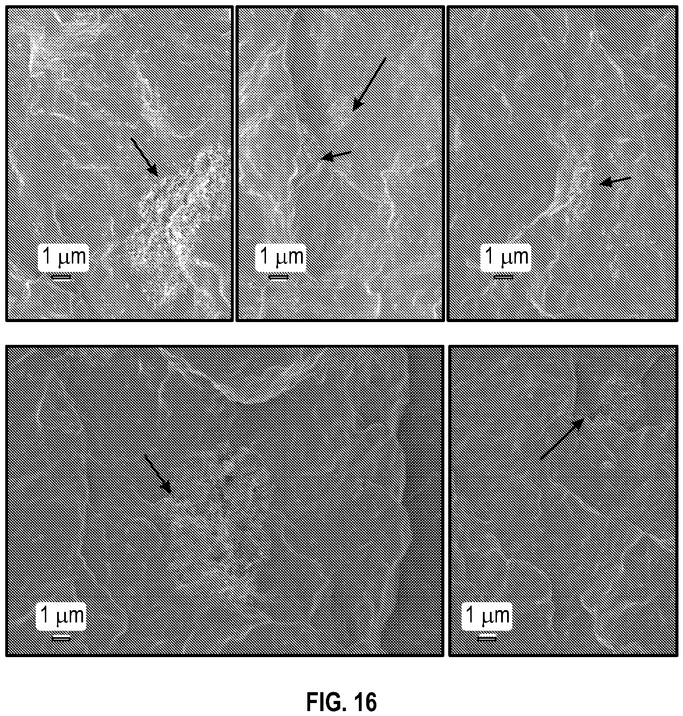

While many individual p-MWNT were observed (Figures 9A to 9I), these samples also contained large (up to about 100 $\mu$m in size) p-MWNT aggregates (Figure 14). Further, MA-g-PP/f-MWNT and PP/f-MWNT containing samples predominantly contained individual MWNT (Figure 10D, Figure 11 and Figures 15A to 15I), while some pockets of 0.5 to 1 $\mu$m size f-MWNT aggregates were observed in the case of the MA-g-PP/f-MWNT master batch based samples (Figure 11), and while few larger aggregates (2 to 10 $\mu$m) were observed in PP/f-MWNT based samples (Figure 16). Figures 15A to 15I display SEM images of PP/MWNT (1 wt.%) nanocomposites impact-fractured surfaces from (a,d,g) p-MWNT, (b,e,h) MA-g-PP/f-MWNT master batch and (c,f,i) PP/f-MWNT master batch after acid etching. Significant lengths of nanotubes were exposed in p-MWNT and MA-g-PP/f-MWNT based samples (Figures 15 D, G, E, and H), however such exposed nanotubes were not observed in PP/f-MWNT based samples. Figure 16 displays SEM images of fractured surfaces of PP/f-MWNT nanocomposites formed from PP/f-MWNT master batch at 1 wt.% f-MWNT after impact test. f-MWNT aggregates of 2 to 10 $\mu$m can be seen in the images in Figure 16.

From the SEM images, at 1 wt.% MWNT loading, the average distance between MWNT was found to be about 400 nm in the two master batch based samples, while this same type of distance was greater ($\sim$ 700 nm) in p-MWNT containing samples, due to the presence of more frequent and larger MWNT aggregated regions in the latter case (Figures 9A to 9I, Figure 10D and Figure 12). At 1 wt.% MWNT of 12 nm diameter, the theoretical distance between MWNT is about 170 nm.

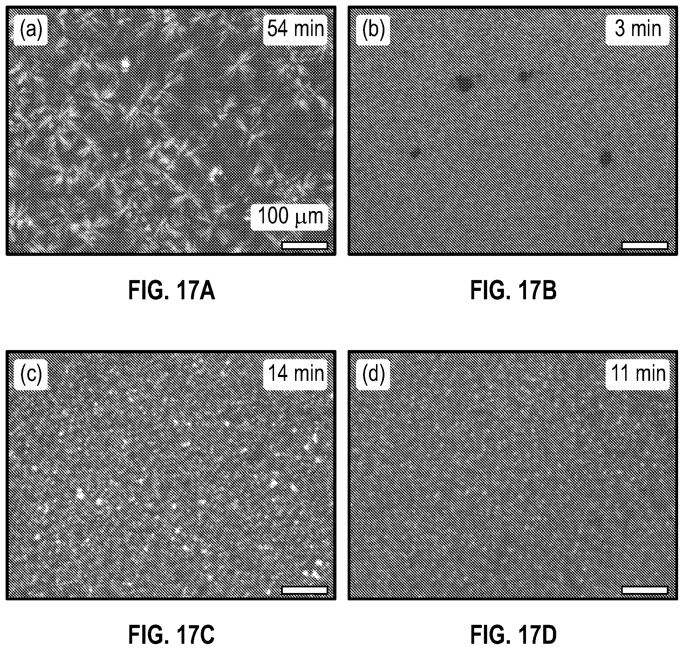

Impact strength of polymers is known to increase with decrease in spherulite size. While spherulite size was not quantitatively determined in this study, from polarizing optical microscopy (Figures 17A to 17D) it can be qualitatively seen that the smallest spherulite size was obtained for the p-MWNT containing sample and that control PP had the largest spherulite size. Figures 17A to 17D display polarized optical micrographs (POM) under cross-polars of (a) PP and PP/MWNT (1 wt.%) nanocomposites containing (b) p-MWNT, (c) MA-g-PP/f-MWNT master batch and (d) PP/f-MWNT master batch. The samples were melted at 200 °C for 5 minutes, followed by cooling at 20 °C/min to 135 °C. Samples were held at 135 °C and photographed when no further spherulitic growth was observed. Time when no further spherulitic growth occurred is indicated on the optical micrographs in Figures 17A to 17D, where scale bar represents 100 $\mu$m. The spherulite size of MA-g-PP/f-MWNT and PP/f-MWNT master batch containing samples were in between the smallest spherulite size obtained for the p-MWNT containing sample and the largest spherulite size obtained for the control PP. The crystallization times as determined by polarizing optical microscopy and DSC follow these spherulite size trends, as expected: samples exhibiting large spherulite size have long crystallization times and vice versa.

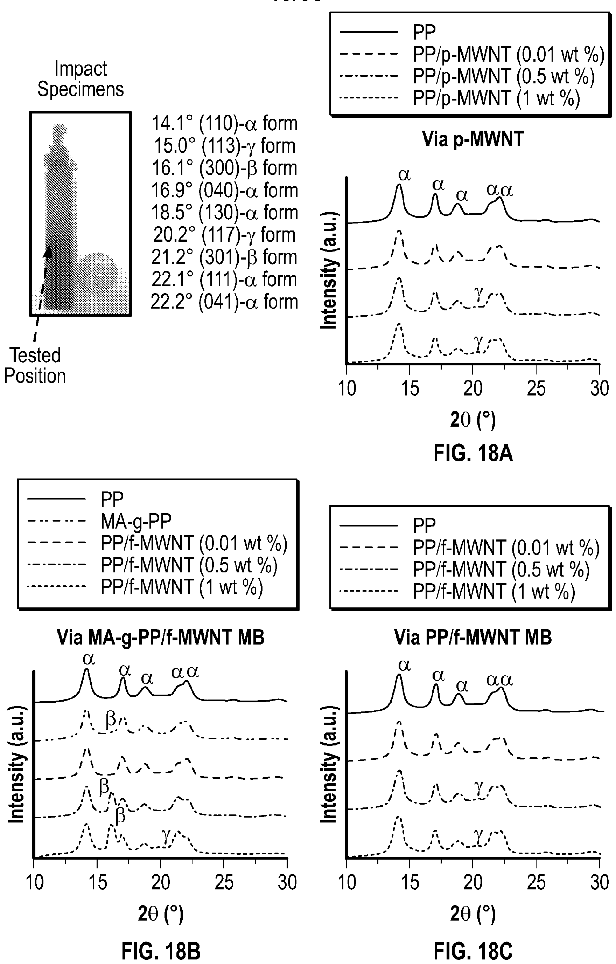

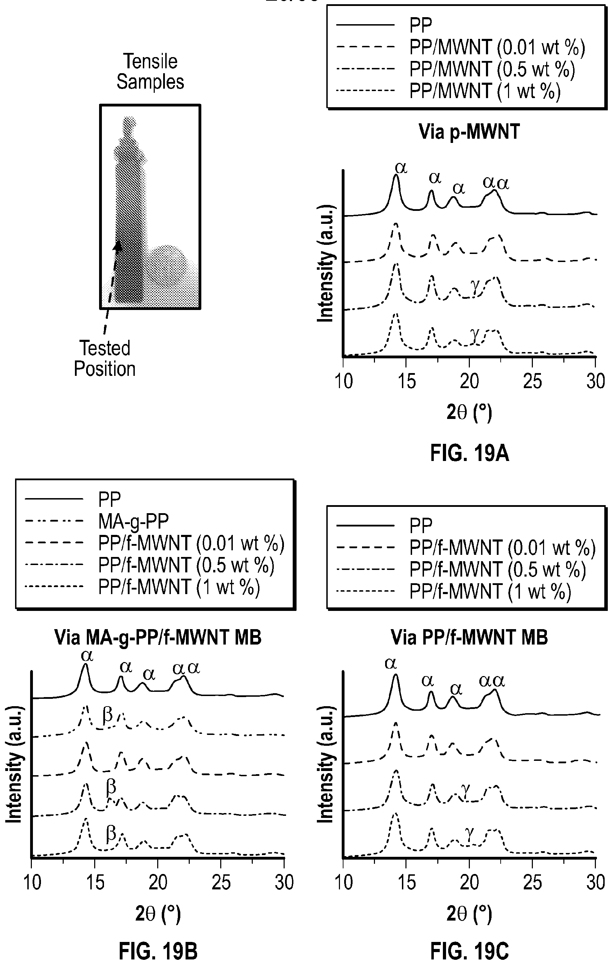

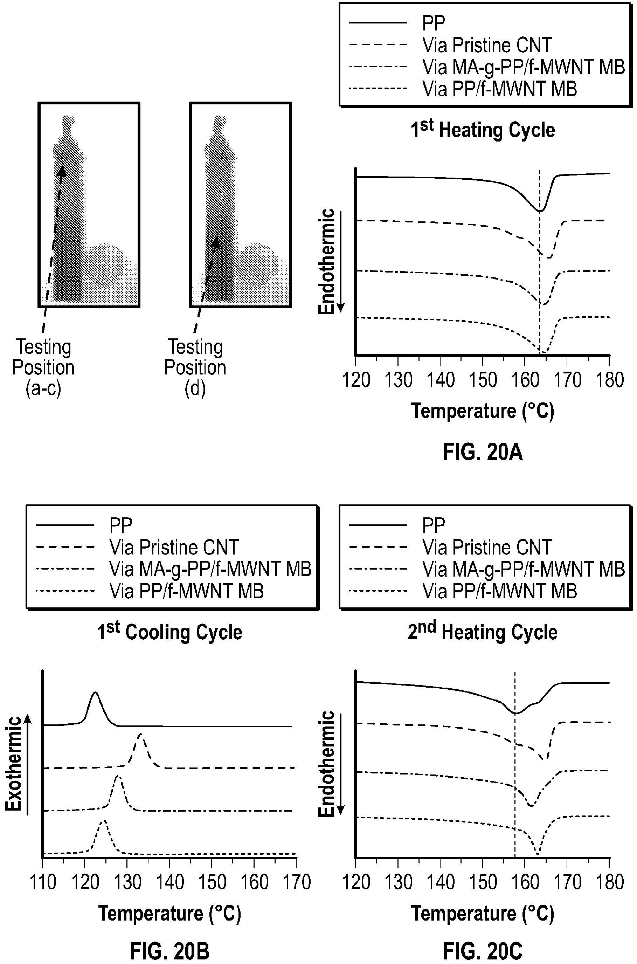

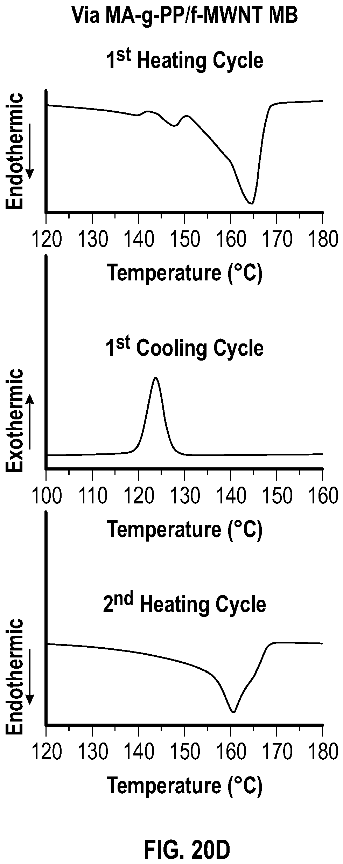

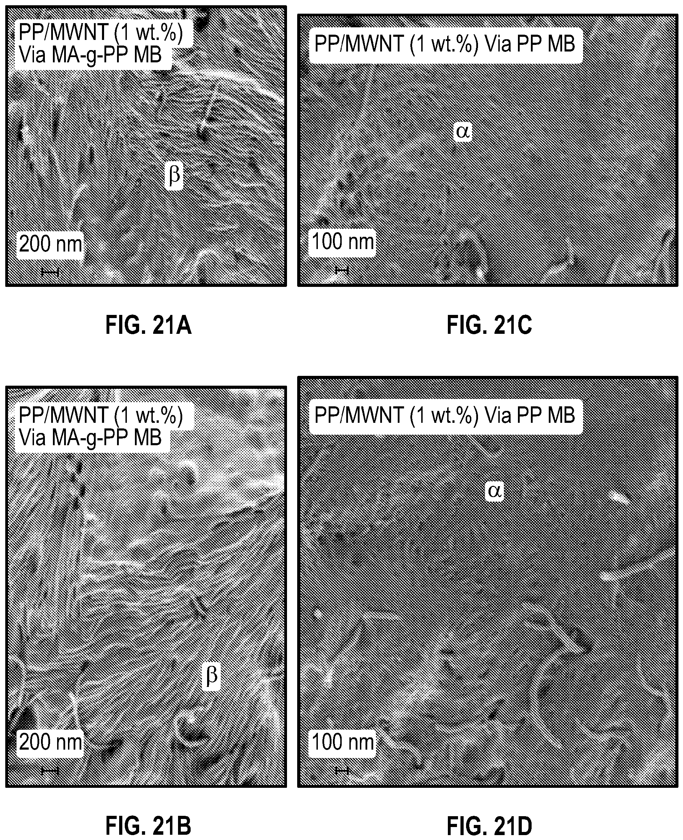

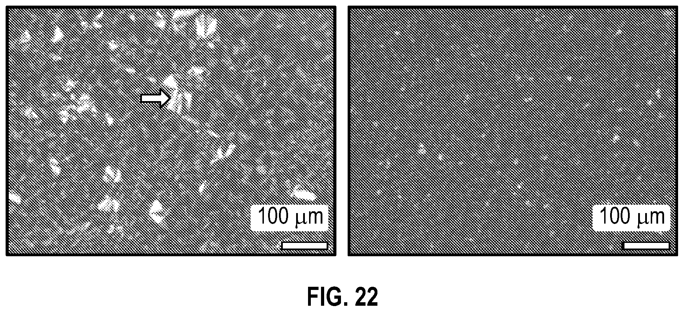

As will be appreciated by one of skill in the art, and with the help of this disclosure, the presence of β crystals is also positively known to affect the impact strength of polypropylene. Further, as appreciated by one of skill in the art, and with the help of this disclosure, while α crystals have higher modulus due to their interconnected lamellar network, β crystals are tougher because they slide over one another in the interlamellar amorphous zones during shear deformation. Previous studies have shown that maleic anhydride grafted propylene-butadiene copolymer (MPPB) results in the formation of β crystals. In the present investigation, β crystals were observed in MA-g-PP containing sample, but they were not observed in control PP, p-MWNT, and PP/f-MWNT based samples. This has been ascertained from WAXD (Figures 18A to 18C and Figure 19A to 19C), DSC (Figures 20A to 20D), SEM (Figures 21A to 21D), and optical microscopy (Figure 22). Figures 18A to 18C display WAXD plots of injection molded rectangular bars, where WAXD was done in the transmission geometry in the center of the bar as shown in the top left figure. Specimens analyzed for Figures 18A to 18D were prepared via (a) p-MWNT, (b) MA-g-PP/f-MWNT master batch and (c) PP/f-MWNT master batch. WAXD of control PP bars are also shown in Figures 18 (A), (B), and (C), and WAXD of only MA-g-PP (powder) is shown in Figure 18 (B). Nanocomposite samples prepared using MA-g-PP/f-MWNT master batch show the presence of β crystals at 0.5 wt.% and 1 wt.% f-MWNT (Figure 18B). Figures 19A to 19C display WAXD plots of PP/MWNT nanocomposite tensile specimens prepared from (a) p-MWNT, (b) MA-g-PP/f-MWNT master batch and (c) PP/f-MWNT master batch. Nanocomposite samples in Figures 19A to 19C prepared via MA-g-PP/f-MWNT master batch route show the presence of β crystal in the 0.5 wt.% and 1 wt.% MWNT containing samples. However, at 1 wt.% MWNT, the amount of β crystals in Figures 19A to 19C were relatively insignificant. WAXD of MA-g-PP (powder) is also shown in Figure 19B. Figures 20A to 20D display DSC thermograms of control PP and various nanocomposites prepared from p-MWNT, MA-g-PP/f-MWNT master batch and PP/f-MWNT master batch at 1 wt.% MWNT loading: (a) 1st heating, (b) 1st cooling, and (c) 2nd heating cycles. For the data in Figures 20A-C, samples were taken from the end of the impact specimen as shown in the photographs on the top left, while for Figure 20D, the sample was taken from the center of the impact specimen (MA-g-PP/f-MWNT based nanocomposite with 1 wt.% carbon nanotube). Figures 21A to 21D display SEM images showing the lamellar morphology of the PP/MWNT nanocomposites prepared (a,b) from MA-g-PP/f-MWNT master batch and (c,d) from PP/f-MWNT master batch. Nanocomposites prepared from MA-g-PP/f-MWNT master batch (Figure 21A-B) showed radial lamella of β-crystals, whereas those prepared from PP/f-MWNT master batch (Figure 21C-D ) showed both radial and tangential lamella of α-crystals. SEM samples for Figures 21A to 21D were prepared from the impact tested specimens after surface etching.

Figure 22 displays polarized optical micrographs under cross-polars of PP/f-MWNT nanocomposites containing MA-g-PP/f-MWNT master batch at (a) 0.5 wt.% MWNT concentration and (b) 1 wt.% concentration. Bright spherulites (shown by red arrow) are the indication of β-crystals. Spherulites with relatively low brightness consists of alpha crystals. The samples for Figure 22 were melted at 200°C for 5 minutes, followed by cooling at 20 °C/min to 135 °C; then the samples were photographed at 135 °C when no further spherulitic growth could be observed. In Figure 22, the scale bar represents 100 μm.

WAXD study showed that MA-g-PP/f-MWNT master batch based nanocomposites contain a β crystal peak at $2\theta = 16.1°$ (Figures 18A to 18C and Figures 19A to 19C), when MA-g-PP concentration was above 9.5 wt.% (9.5 wt.% MA-g-PP corresponds to the amount of MA-g-PP in MA-g-PP/f-MWNT master batch based nanocomposite containing 0.5 wt.% f-MWNT). Below this concentration, β crystals were not observed. From the SEM images (Figure 22) it was found that β-phase lamellae grow radially outwards without interconnecting cross-hatched lamellar network whereas α-phase spherulites contain, both tangential and radial lamellae. The POM image (Figure 22) of 0.5 and 1 wt.% f-MWNT containing MA-g-PP/f-MWNT nanocomposite shows β-phase crystals which are optically distinguishable due to high brightness within the less bright spherulites from α crystals. In DSC (Figure 20D), the 1st heating cycle from the 1 wt.% f-MWNT nanocomposite shows two endothermic peaks at ~147 and ~164 °C. The former can be attributed to the melting of β-phase and the latter can be attributed to the melting of α-phase. It is worth noting that the β endothermic peak was observed when the DSC sample was taken from the center of the impact specimen, and when the DSC sample was taken from the end of the impact specimen (Figure 20A), then only melting corresponding to α-phase was observed. This suggests that for the small differences in the processing parameter window become important for the formation of β crystals, along with the presence of MA-g-PP polymer. Also, after removing the processing history, the two DSC samples (center and end portion of the injection molded bar as shown in Figure 20A) during second heating showed identical melting endotherm corresponding to α-phase (Figures 20C and 20D). This further confirmed the importance of the precise control of the processing parameters for the development of β crystals.

Impact strength improvements in MA-g-PP/f-MWNT containing samples at least in part, can be attributed to the presence of β crystals. The largest improvement in impact strength was observed in PP/f-MWNT based samples that contained no β crystals and these samples exhibited spherulite size somewhat larger than that for p-MWNT containing samples. 1 wt.% MWNT samples based on PP/f-MWNT master batch had yield stress and modulus values statistically comparable, while the impact strength was 152% higher than that for the control PP. Tensile testing was done at a relatively low strain rate of 2.54/min, while significantly higher strain rates were realized in Izod notched impact testing ($1.8 \times 10^4$/min). MWNT in PP/f-MWNT master batch were coated with PP, which was then embedded in a PP matrix.

Further, MWNT in MA-g-PP/f-MWNT master batch were coated with MA-g-PP, while p-MWNT had no coating. PP interacts with p-MWNT as seen from high crystallization nucleation rate and low crystallization times for the PP/p-MWNT system (Figures 17A to 17D and Table 5). Table 5 displays crystallization temperature ($T_c$) based on DSC at heating and subsequent cooling rates of 2.5 °C/min, and isothermal DSC data of crystallization half-time $t_{1/2}$ (min) at 135 °C.

Table 5

| Materials | MWNT concentration (wt. %) | $T_c$ (°C) | Half-time, $t_{1/2}$ (min) at 135 °C |
|---|---|---|---|
| Control PP | - | 122.0 | > 90 |
| Nanocomposites via p-MWNT | 0.01 | 126.5 | 11.8 |
| | 0.1 | 126.6 | 8.8 |
| | 0.3 | 127.4 | 4.4 |
| | 0.5 | 129.0 | --- |
| | 1 | 132.9 | 1.5 |
| Nanocomposites via MA-g-PP/f-MWNT master batch | 0.005 | 120.0 | --- |
| | 0.01 | 120.8 | 29.6 |
| | 0.1 | 122.0 | 21.1 |
| | 0.3 | 122.7 | 24.4 |
| | 0.5 | 122.3 | --- |
| | 1 | 124.4 | 16.3 |
| Nanocomposites via PP/f-MWNT master batch | 0.005 | 121.8 | --- |
| | 0.01 | 123.0 | 16.0 |
| | 0.1 | 125.7 | 6.9 |
| | 0.3 | 130.0 | 3.3 |
| | 0.5 | 127.6 | --- |
| | 1 | 127.4 | 7.0 |

It appears that the most coherent PP/MWNT interface is present in the PP/f-MWNT containing samples. During solution master batch processing, entanglements can be minimized both in PP and MWNT. Without wishing to be limited by theory, during melt blending of PP with p-MWNT, due to higher degree of entanglements, both in PP and in MWNT, the length of the interface could be relatively small, as compared to the interface length in PP/f-MWNT master batch based sample. The high impact strength of PP/f-MWNT master batch containing sample can be attributed to this long and coherent interface coupled with small spherulite size, while relatively low impact strength of p-MWNT can be attributed to MWNT aggregate. Higher molecular weight of PP when compared to the molecular weight of the MA-g-PP, could also be responsible for differences in impact strength between PP/f-MWNT and MA-g-PP/f-MWNT master batch based samples.

EXAMPLE 7

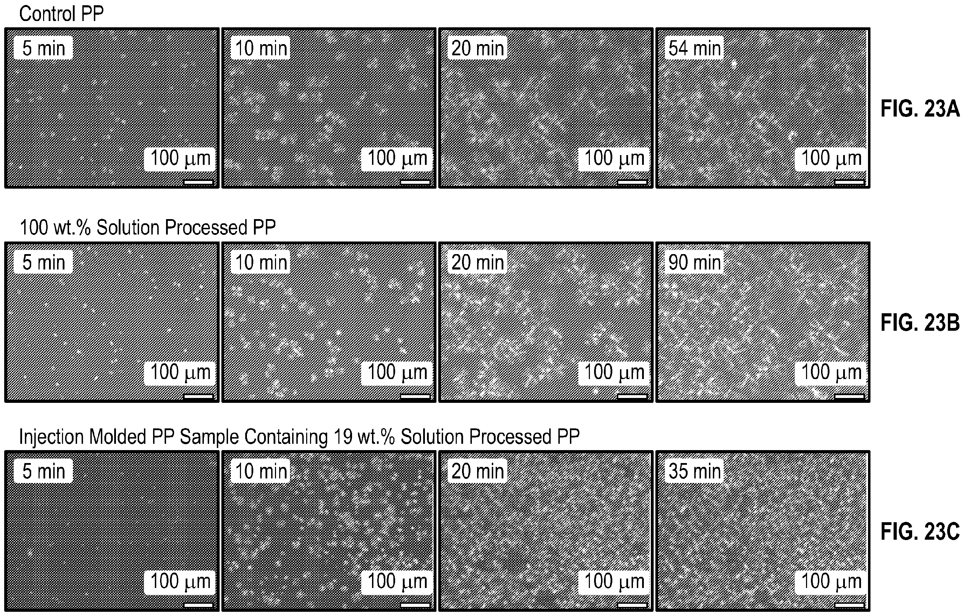

The role of the presence of solution processed PP on the impact strength was also investigated, as 1 wt.% MWNT containing samples prepared from the PP/f-MWNT master batch contain high concentration (19 wt.%) of solution processed PP. Without wishing to be limited by theory, the dilute solution processed PP is expected to have fewer entanglements than melt processed PP, and this can affect crystallization, which in turn can affect mechanical properties. As such, PP was processed from dilute solution in the same way as PP/f-MWNT master batch (as described in Example 1), except that in the solution processed PP, no f-MWNT were used. PP/solution processed PP (19 wt.%) was melt compounded and injection molded using the same process parameters as used for various nanocomposites, as described in Example 1. PP/solution processed PP (19 wt.%) exhibited higher nucleation rate (Figures 23A to 23C) and a lower crystallization temperature compared to that of the control PP (Table 6). Figures 23A to 23C display polarized optical micrographs under cross-polars of (a) control PP, (b) solution processed PP and (c) 19 wt.% solution processed PP in injection molded PP samples. The samples in Figures 23A to 23C were melted at 200°C for 5 minutes, followed by a cooling at 20 °C/min to 135 °C, and then the samples were photographed at different holding times at 135 °C as indicated on the images. Most right micrograph in each sample in Figures 23A to 23C was taken at a time when no further spherulitic growth was observed. In Figures 23A to 23C, samples (A) and (C) are injection molded, while sample (B) was powder; and scale bar represents 100 $\mu$m. Table 6 displays data from DSC study of the injection molded samples.

Table 6

| Materials | $T_C$ (°C)[1] | FWHM of $T_C$ (°C)[1] | $T_m$ (°C)[2] | Crystallinity (%)[3] | Crystallinity (%)[2] |
|---|---|---|---|---|---|
| PP | 122.0 | 3.7 | 158.0 | 54 | 51 |
| PP/19 wt.% solution processed PP | 118.7 | 4.3 | 159.2 | 54 | 50 |
| PP/MWNT (1 wt.%) via PP/f-MWNT | 127.4 | 3.6 | 162.9 | 48 | 53.6 |
| Notes: [1] from 1st cooling cycle; [2] from 2nd heating cycle; [3] from 1st heating cycle | | | | | |

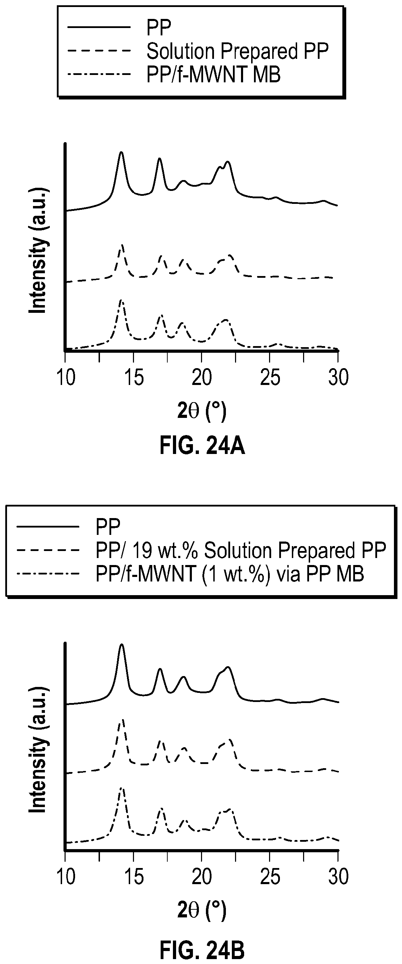

Without wishing to be limited by theory, the influence of solution processed PP is similar to the effect of plasticizers on the nucleation rate and crystallization temperature of polymers. WAXD results of PP/solution processed PP are presented in Figures 24A and 24B and Table 7. Figures 24A and 24B display WAXD plots of (a) PP powder, solution processed PP powder, and PP/f-MWNT master batch; (b) injection molded control PP tensile specimen, PP/19 wt.% solution processed PP tensile specimen and 1 wt.% MWNT containing nanocomposite based on PP/f-MWNT master batch. Table 7 displays structural information of injection molded samples as calculated from Figures 19A to 19C.

Table 7

| | Crystallinity (%) | Crystal size (nm) | FWHM of (040) |
|---|---|---|---|
| PP | 69 | 11.3 | 54.6 |
| PP/ 19 wt.% solution processed PP | 71 | 11.2 | 50.0 |
| PP/MWNT (1 wt.%) via PP/f-MWNT | 72 | 10.9 | 50.5 |

Higher PP orientation (lower FWHM of 040 crystal peak) in the PP/solution processed PP (19 wt.%) sample than in the control PP can be attributed to the less entangled solution processed PP chains (Table 7). The impact strength of PP/solution processed PP was 55% higher than that for the control PP (Table 8), while the impact strength of 1 wt.% MWNT containing sample based on PP/f-MWNT master batch was 152% higher. Table 8 displays Notched Izod impact strength of PP/MWNT nanocomposites prepared from PP/f-MWNT master batch and PP/solution processed PP (SpPP). The corresponding SpPP concentration in 0.1 wt.% and 1 wt.% PP/f-MWNT nanocomposites were 1.9 and 19 wt.%, respectively.

Table 8

| Impact strength (kJ/m$^2$) | | | | |
|---|---|---|---|---|
| PP/f-MWNT nanocomposite via PP/f-MWNT MB | | f-MWNT wt. % | | |
| | | 0 | 0.1 | 1 |
| | Average | 2.39 | 2.87 | 6.04 |
| | SD | 0.18 | 0.34 | 0.28 |
| PP/solution processed PP (SpPP) | | SpPP wt. % | | |
| | | 0 | 1.9 | 19 |
| | Average | 2.39 | 3.23 | 3.73 |
| | SD | 0.18 | 0.11 | 0.67 |

The data in Tables 6, 7, and 8, and in Figures 23A to 23C and 24A and 24B clearly shows that solution processed PP affects both crystallization as well as impact behavior. However, the effect of PP/f-MWNT master batch based sample on the impact strength is significantly higher than that observed by using the same amount of solution processed PP as present in 1 wt.% MWNT containing sample based on PP/f-MWNT master batch (impact strength increase of 55% with solution processed PP vs. 152% increase with PP/f-MWNT master batch at 1 wt.% CNT). As such, the contribution of solution processed PP to the impact strength properties of the nanocomposite is much less than the contribution of the PP coated f-MWNT.

Without wishing to be limited by theory, during master batch preparation, dilute solution processing allows polymer chains to interact with f-MWNT more effectively by reducing the entanglements of both the components, and this promotes higher order for the interphase polymer than the bulk polymer; and as such, in the master batch based nanocomposites, the coherent PP/CNT interface can result in more ordered interphase region. As shown from the DSC endotherm in Figures 20A to 20D, $T_m$ of the PP/f-MWNT and MA-g-PP/f-MWNT master batch containing sample increased by 4.9 °C and 3.6 °C, respectively, at 1 wt.% f-MWNT concentration, suggesting a higher degree of crystal perfection of the interfacial polymers. Further, in p-MWNT containing sample, the endotherm consisted of a broad peak at lower temperature followed by the recrystallization and subsequent melting of these less perfect crystals. Further, without wishing to be limited by theory, in the master batch based nanocomposites, it is possible that the presence of the PP/CNT interface effectively dissipates the impact energy from the polymer matrix to the well-dispersed CNT resulting from good interaction between the two.

EXAMPLE 8

The impact fractured surfaces of various samples prepared as described in Example 1, and of control samples prepared as described in Example 7, and tested as described in Example 3 were also investigated.

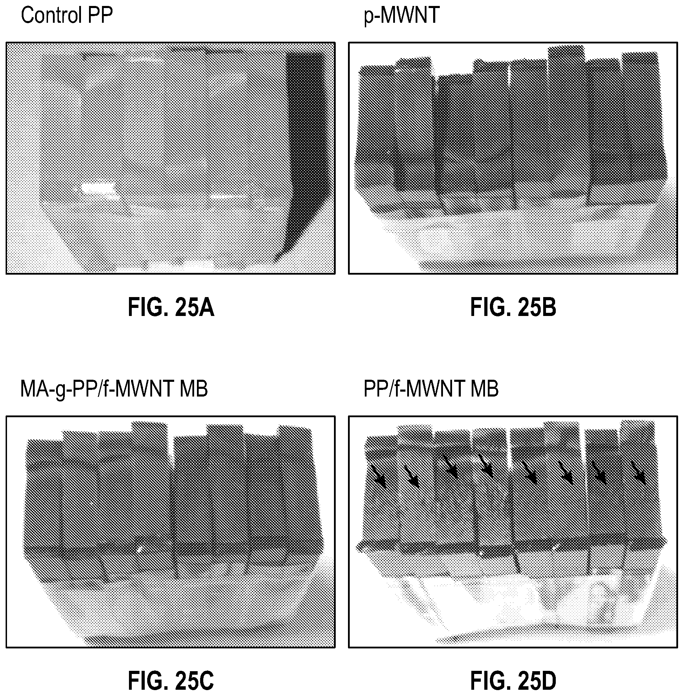

The photographs of the fractured surfaces of the impact tested control PP and 1 wt. % CNT containing samples are given in Figures 25A to 25D. Figures 25A to 25D display photographs of the fractured surfaces of the impact tested samples prepared from (a) control PP and 1 wt.% MWNT containing nanocomposites formed from (b) p-MWNT, (c) MA-g-PP/f-MWNT master batch and (d) PP/f-MWNT master batch; wherein two consecutive pieces were obtained from the same sample. Arrows in Figure 25D show the presence of significant surface roughness in the PP/f-MWNT master batch based samples. In Figures 25A to 25D, 1 wt.% MWNT containing sample based on PP/f-MWNT master batch showed very rough fracture surface, while control PP and the other two types of nanocomposites (p-MWNT and MA-g-PP/f-MWNT master batch based systems) exhibited relatively smooth fracture surfaces. These differences in fracture surfaces clearly show that crack propagation has higher resistance in PP/f-MWNT based samples than all the other samples. To gain better understanding of the fracture behavior under impact, fracture surfaces were also imaged using scanning electron microscopy. Imaging was done on both un-etched and etched surfaces.

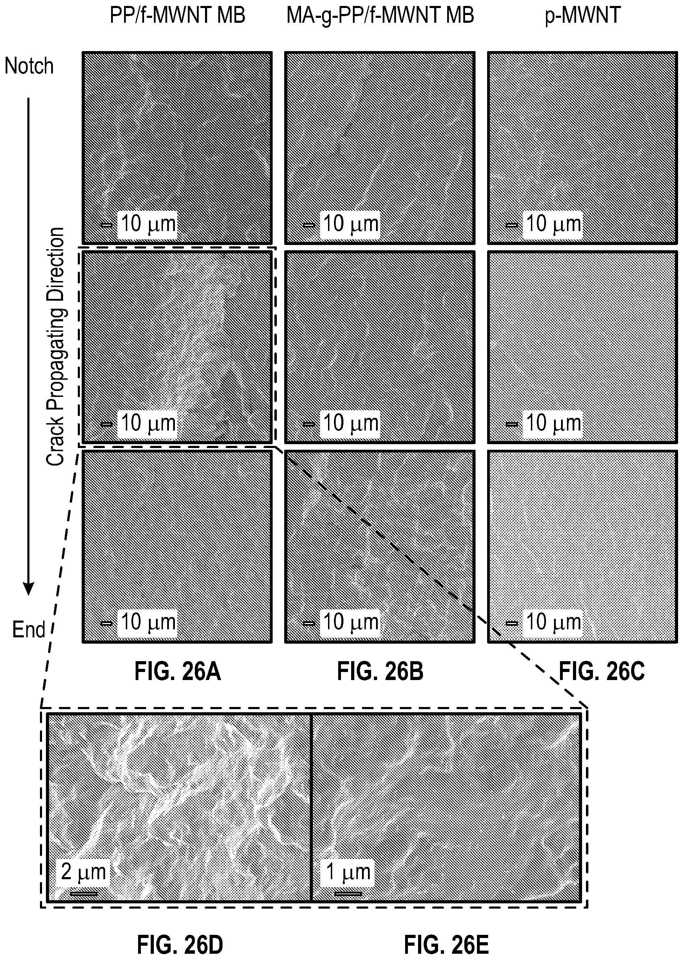

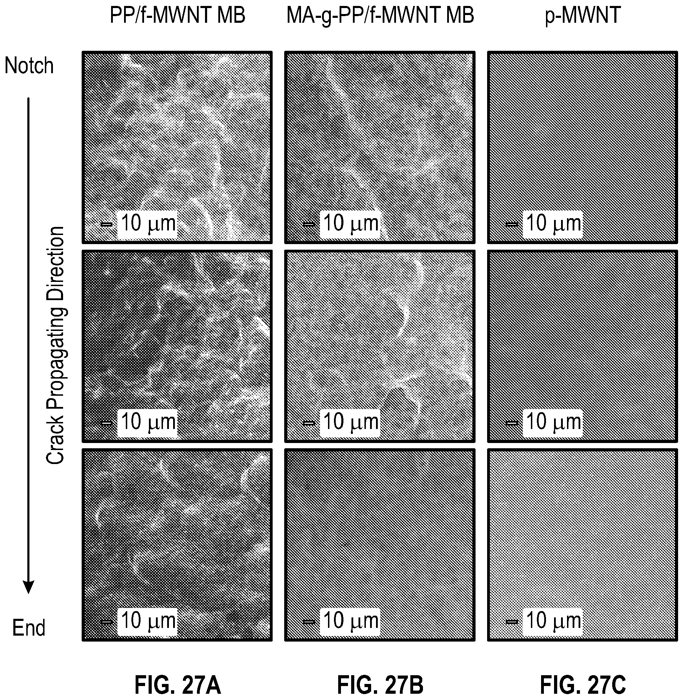

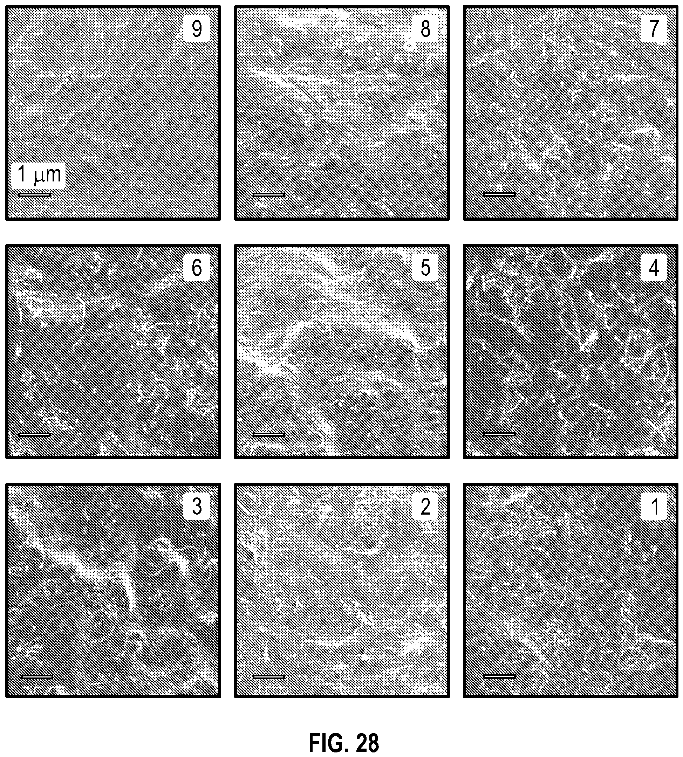

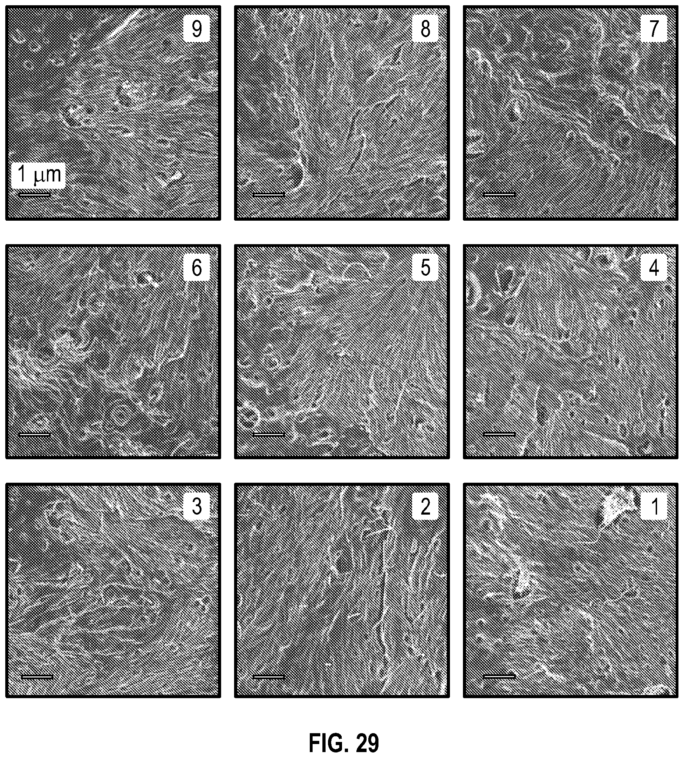

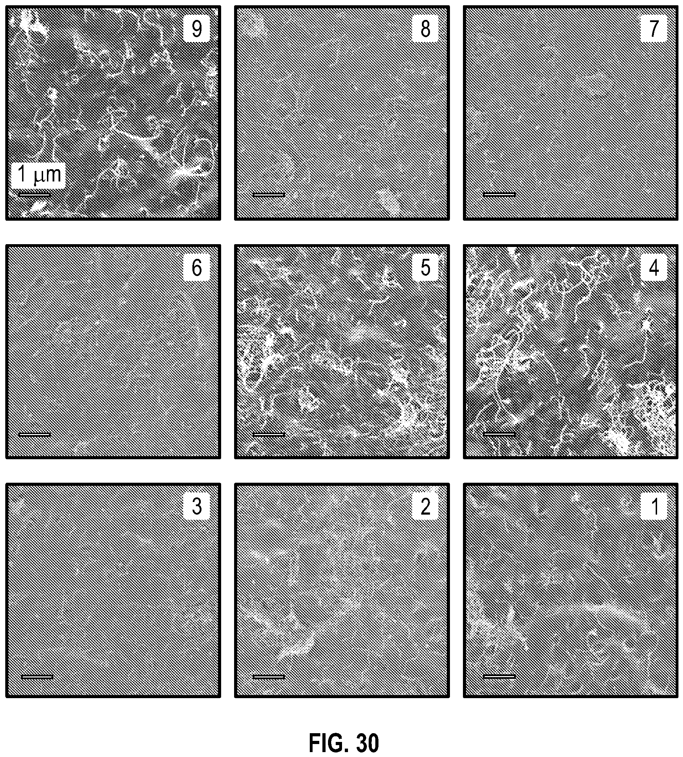

Under SEM, observation at relatively low magnification, the entire impact-fracture surface of the p-MWNT based nanocomposite was relatively smooth as compared to the two master batch based samples (Figures 26A to 26E). Figures 26A to 26E displays SEM images of PP/MWNT nanocomposites impact-fractured surface prepared from (a,d,e) PP/f-MWNT master batch; (b) MA-g-PP/f-MWNT master batch; and (c) p-MWNT. Scale bars represent 10 $\mu$m in Figures 26A to 26C. In the center region across the crack propagating direction, relatively rough features were clearly observed (Figure 25D) in the PP/f-MWNT master batch based sample along with the broken nanotubes on the surface (Figures 26D and 26E). During acid etching of the impact-fractured surfaces, the amorphous PP regions were removed. SEM images of the etched samples are shown in Figures 15A to 15I, 27A to 27C, 28, 29, and 30. Figures 27A to 27C displays SEM images of PP/MWNT nanocomposites (at 1 wt.% MWNT loading) impact-fractured surface prepared from (a) PP/f-MWNT master batch; (b) MA-g-PP/f-MWNT master batch; and (c) p-MWNT after acid etching; where the scale bars represent 10 $\mu$m. Figure 28 displays SEM mapping of PP/MWNT nanocomposites (at 1 wt.% MWNT loading) impact-fractured surface prepared from PP/f-MWNT master batch after etching; wherein scale bars represent 1 $\mu$m. Figure 29 displays SEM mapping of PP/MWNT nanocomposites (at 1 wt.% MWNT loading) impact-fractured surface prepared from MAg-PP/f-MWNT master batch after etching; where scale bars represent 1 $\mu$m. In Figure 29, less crystalline MA-g-PP were etched and washed away leaving cavities on the sample surface. Figure 30 displays SEM mapping of PP/MWNT nanocomposites (at 1 wt.% MWNT loading) impact-fractured surface prepared from p-MWNT after etching; where scale bars represent 1 $\mu$m. In Figure 30, many p-MWNT aggregates were observed, suggesting amorphous polymer in the vicinity of p-MWNT aggregates.

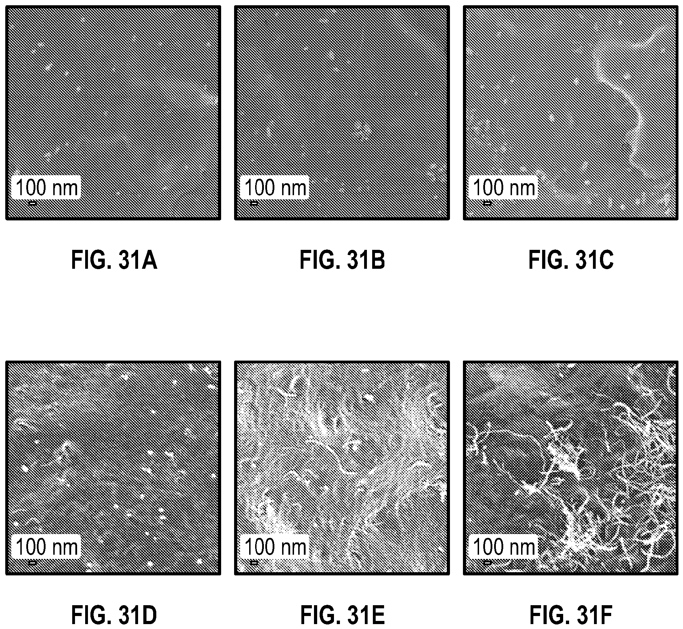

The topography of the etched samples in Figures 15A to 15I, 27A to 27C, 28, 29, and 30 also suggests that PP/f-MWNT master batch based samples still exhibits the roughest surface among the three types of nanocomposites (Figure 27A). In PP/f-MWNT based nanocomposite, the pull-out lengths of the nanotubes are comparable to those before etching (Figure 31A and 31D). Figures 31A to 31D display SEM images of PP/MWNT nanocomposites impact-fractured surface prepared from (a,b and d.e) PP/f-MWNT master batch and (c,f) p-MWNT. Figures 31A, 31B, and 31C are of unetched samples, while Figures 31D, 31E, and 31F were taken on etched samples. In Figures 31A to 31F, more of the MWNT are revealed in the etched samples from PP/p-MWNT than from PP/f-MWNT based samples, which suggests a significant difference in the interphase morphology in the two nanocomposites. Further, PP/f-MWNT master batch based samples were more solvent resistant than PP/p-MWNT.

The data in Figures 31A to 31F indicate that MWNT are well-bonded in the matrix due to the strong PP/CNT interface. Further, MA-g-PP was etched and washed away showing a relatively weak interaction between interfacial MA-g-PP and the matrix PP (Figures 15A to 15I and Figure 29). The MWNT aggregates that exhibited the worst interaction with polymer were completely exposed to the surface in the p-MWNT based nanocomposite (Figures 15A to 15I and Figure 30). PP/f-MWNT master batch based sample was more solvent resistant than MA-g-PP/f-MWNT based and PP/p-MWNT samples. In Figures 31A to 31F, a significant difference in the interphase morphology in the etched nanocomposite samples can be seen. That is, longer lengths of MWNT are revealed in the latter two cases than for PP/f-MWNT based samples. Even upon etching, most of the nanotubes in the PP/f-MWNT based sample remained bonded with the polymer matrix, while more MWNT surfaces were visible in the MA-g-PP/f-MWNT based samples and in PP/p-MWNT.

EXAMPLE 9

Spherulites were investigated for impact fractured surfaces of various samples prepared as described in Example 1, and tested as described in Example 3 were also investigated.

Generally, a spherulitic boundary is typically considered to be the weak point and is often the initiating point for mechanical failure. Two strategies are conventionally used to improve the fracture toughness of polypropylene, for example reducing the spherulite size and strengthening the spherulite boundaries. The former can be easily achieved through the introduction of nucleating agents such as sodium benzoate, while the latter has been approached through creating of inter-spherulitic links and tie molecules at spherulite boundaries, as well as in the interlamellar regions with the help of a multiblock copolymers of isotactic and atactic polypropylene (iPP,aPP) or a random ethylene-propylene copolymer. Copolymer regions are unable to crystallize (while isotactic PP segments crystallize) and hence these non-crystallizing regions can migrate to the boundary sites and can become connecting chains between adjacent spherulites.

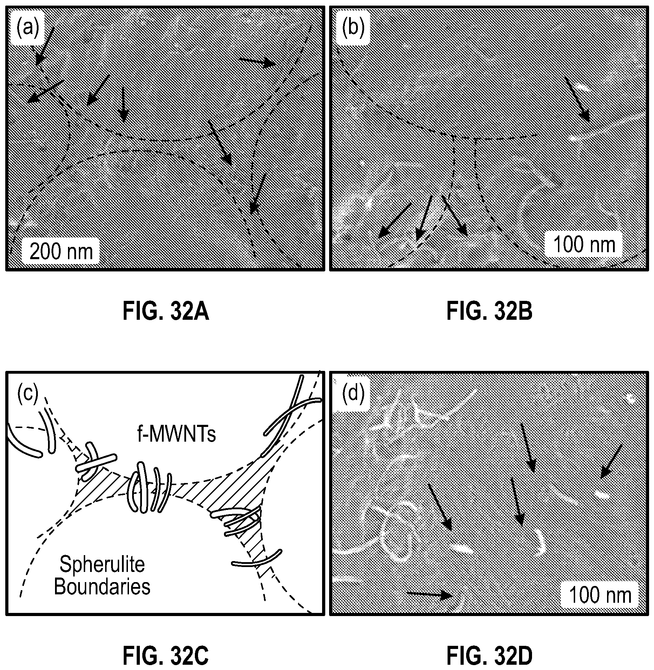

Without wishing to be limited by theory, in the PP/MWNT nanocomposites, some of the MWNT that do not nucleate PP crystallization will be excluded from PP crystals, and these MWNT can become the connecting links between spherulites and in between interlamellar amorphous regions. In Figures 32A to 32D, individual f-MWNT were observed at the spherulite boundaries (Figures 32A and 32B) and inside the spherulites (Figure 32C) in the PP/f-MWNT master batch based samples, and in Figure 29 in MA-g-PP/f-MWNT based nanocomposite. Figures 32A to 32D display SEM images (a, b, c, d) of PP/MWNT (1 wt.%) nanocomposites impact-fractured surfaces prepared from PP/f-MWNT master batch. Figure 32C is schematic of Figure 32A showing MWNT connecting spherulites. The highest impact strength in PP/f-MWNT based samples among the three categories of nanocomposites investigated herein suggests that the PP/f-MWNT based samples exhibit the strongest interfacial bond between these three nanocomposites. Without wishing to be limited by theory, such interphase effect combined with the reduced spherulite size because of the nucleating ability of f-MWNT, could be the main toughening mechanisms in the PP/f-MWNT master batch based nanocomposites at high f-MWNT loadings (0.3 to 1 wt. %).

EXAMPLE 10

The crystallinity of various samples prepared as described in Example 1 was also investigated. WAXD data on various samples are given in Figures 18A to 18C and Figures 19A to 19C, and in Table 9. Table 9 displays structural information of PP/MWNT nanocomposites (tensile specimens) prepared from p-MWNT, MA-g-PP/f-MWNT master batch and PP/f-MWNT master batch.

Table 9

| MWNT concentration (wt. %) | Nanocomposites via p-MWNT | | | Nanocomposites via MA-g-PP/f-MWNT MB | | | Nanocomposites via PP/f-MWNT MB | | |
|---|---|---|---|---|---|---|---|---|---|
| | $X_c$ (%)[1] | $L_{PP}$ (nm)[2] | $f_{PP}$[3] | $X_c$ (%)[1] | $L_{PP}$ (nm)[2] | $f_{PP}$[3] | $X_c$ (%)[1] | $L_{PP}$ (nm)[2] | $f_{PP}$[3] |
| 0 | 69 | 11.3 | 54.6 | 69 | 11.3 | 54.6 | 69 | 11.3 | 54.6 |
| 0.01 | 68 | 11.3 | 52.1 | 68 | 12 | 56.6 | 69 | 11.1 | 52.6 |
| 0.5 | 71 | 10.7 | 50.3 | 73 | 11.1 | 50 | 72 | 11 | 51.2 |
| 1 | 72 | 10.2 | 45.2 | 73 | 10.9 | 43.3 | 72 | 10.9 | 50.5 |

Notes: [1] $X_c$: crystallinity from integrated radial scans; [2] $L_{PP}$: crystal size of (110) at $2\theta \sim 14.1°$ according to Scherrer's equation with K = 0.9; and [3] $f_{PP}$: FWHM of (040) at $2\theta \sim 16.9$.

The formation of β crystals in the injection molded tensile specimens was not as pronounced as in the injection molded impact bars in MA-g-PP/f-MWNT master batch based nanocomposites. Without wishing to be limited by theory, this could likely be due to the differences in the processing history encountered in the two cases during injection molding. Transformation from β crystal to α crystal under shear force has been previously reported. γ crystals have also been previously observed in the three types of nanocomposites at relatively high CNT loadings, but no γ crystals were observed in the neat PP.

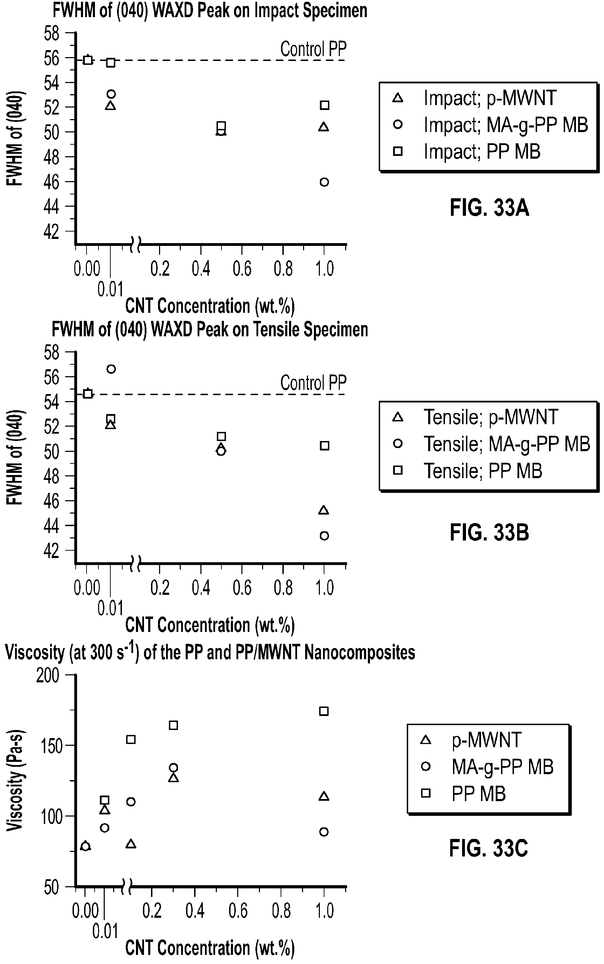

The polymer orientation data along the flow direction during injection molding is also given in Table 9. As MWNT concentration increased, polymer chains became more aligned in all three nanocomposites. The degree of alignment was related to the melt viscosity at 300 s$^{-1}$ (corresponding to the calculated shear rate at the exit of the melt transfer device to the mold). That is, the MA-g-PP/f-MWNT based sample had the lowest viscosity and the highest polymer orientation followed by the p-MWNT and then by the PP/f-MWNT based sample, which has the highest viscosity and lowest polymer orientation (Figures 33A to 33C and Table 9). Figures 33A to 33C display the full width at half maximum (FWHM) of the (040) WAXD peak (Figures 10A, 10B, 10C) of the (a) impact and (b) tensile samples prepared from PP and PP/MWNT nanocomposites at different MWNT concentrations; (c) viscosity of the PP and PP/MWNT nanocomposite melts at different MWNT concentrations at 300 s$^{-1}$. The shear rate of 300 s$^{-1}$ corresponds to a calculated shear rate at the exit of the melt transfer device to the mold of the injection molding machine).

The MA-g-PP containing sample was expected to have lower viscosity due to its lower molecular weight than PP. Better dispersion as well as interaction of f-MWNT in PP/f-MWNT based sample resulted in higher viscosity and lower polymer orientation compared to the p-MWNT and MA-g-PP/f-MWNT based nanocomposites.

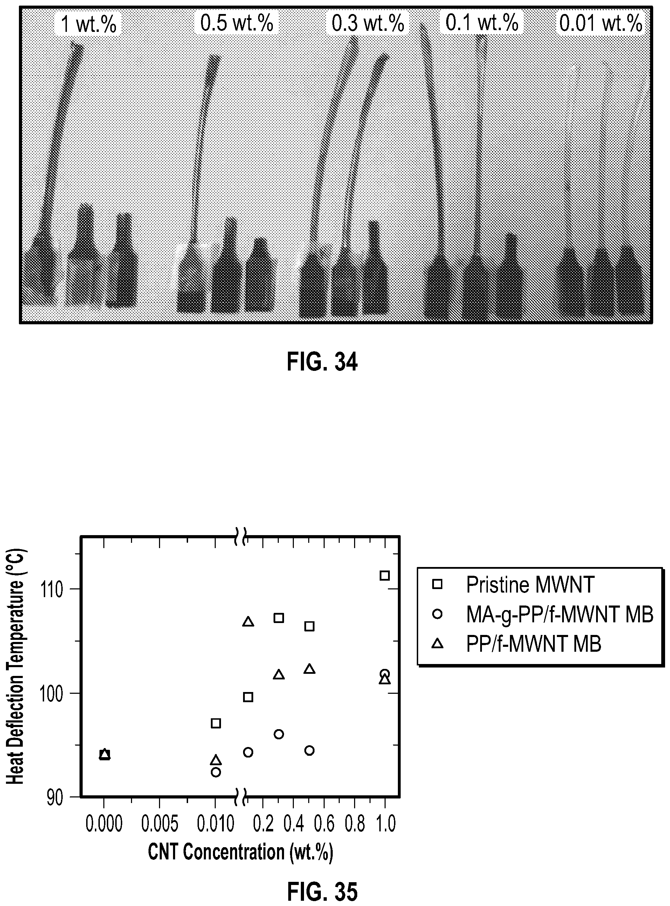

The data in Table 9 shows that there is a modest increase in crystallinity from 69% in the control PP to 72-73% in the three nanocomposites at 1 wt.% CNT, and at the same time there is a modest decrease in crystal size [for (110) plane] from 11.3 nm to 10.2-10.9 nm in the three nanocomposites at the same MWNT concentration. Without wishing to be limited by theory, MWNT align along the drawing direction during the tensile test. The orientation of MWNT ($f_{CNT}$) after tensile testing (Figure 34) is given in Table 10. Figure 34 displays PP/MWNT nanocomposites prepared from PP/f-MWNT master batch (left), MA-g-PP/f-MWNT master batch (middle) and p-MWNT (right) used for Raman study at different MWNT concentration. Raman data on the samples in Figure 34 is given in Table 10. Table 10 displays $f_{CNT}$ of PP/MWNT nanocomposites prepared from p-MWNT, MA-g-PP/f-MWNT master batch and PP/f-MWNT master batch. Numbers in bracket in Table 10 are the strain to failure of the given tested sample.

Table 10

| MWNT Concentration (wt. %) | $f$ CNT of nanocomposites | | |
|---|---|---|---|
| | via p-MWNT | via MA-g-PP/f-MWNT MB | via PP/f-MWNT MB |
| 0.01 | 0.42 [285 %] | 0.3 [335 %] | 0.35 [292 %] |
| 0.1 | 0.03 [8 %] | 0.18 [283 %] | 0.24 [302 %] |
| 0.3 | 0.07 [16 %] | 0.23 [350 %] | 0.23 [350 %] |
| 0.5 | $\cong$ 0 [15 %] | 0.04 [18 %] | 0.19 [281 %] |
| 1 | $\cong$ 0 [11 %] | $\cong$ 0 [22 %] | $\cong$ 0 [283 %] |

Raman spectra were collected to determine CNT orientation using a Holoprobe Research 785. A Raman microscope made by Kaiser Optical System ($\lambda$ = 785 nm) using parallel (VV) and crossed (VH) polarizers, with the sample (Figure 34) axis rotated in 10 degree increments from 0 to 90°. Equation (2) was used to determine CNT orientation, $f_{CNT}$ (Table 10). Equation (2) was simultaneously solved for three variables (r, <P200> = $f_{CNT}$, and <P400>).

The MWNT orientation was determined using Raman spectroscopy. At 1 wt.% MWNT concentration, there was practically no MWNT orientation developed during tensile testing. The strain to failure in p-MWNT and MA-g-PP/f-MWNT based samples was low (11 and 22%) for these two tested samples. However, the PP/f-MWNT based sample (at 1 wt.% MWNT) with a strain of 283% also did not exhibit any MWNT orientation. At low MWNT concentration of 0.01 wt. %, reasonably good MWNT orientation (in range of 0.3 to 0.42) was observed in all three nanocomposites at strain values in the range of 285 to 335%. At MWNT concentrations between 0.01 and 1 wt.%, an intermediate level of MWNT orientation values were observed, and reasonably good MWNT orientation was observed at up to 0.5 wt.% MWNT in PP/f-MWNT master batch based samples, while MWNT orientation was observed at up to 0.3 wt.% MWNT in MA-g-PP/f-MWNT based samples, and good MWNT orientation was observed only at 0.01 wt.% in the case of p-MWNT. These data provide further support of good interaction between MWNT and PP in the case of PP/f-MWNT based samples, as compared to the other two types of nanocomposites.

EXAMPLE 11

The heat deflection temperature of various samples prepared as described in Example 1 was also investigated.

Incorporation of MWNT in the PP resulted in higher heat deflection temperature (HDT) as compared to the control PP (Figure 35 and Table 11). Figure 35 displays heat deflection temperatures of PP/MWNT nanocomposites prepared from p-MWNT, MA-g-PP/f-MWNT master batch, and PP/f-MWNT master batch. Table 11 displays HDT of PP/MWNT nanocomposites prepared from p-MWNT, MA-g-PP/f-MWNT master batch and PP/f-MWNT master batch.

Table 11

| MWNT concentration (wt. %) | HDT (° C) of nanocomposites | | |
|---|---|---|---|
| | Via p-MWNT | Via MA-g-PP/f-MWNT MB | Via PP/f-MWNT MB |
| 0 | 94 | 94 | 94 |
| 0.01 | 97 | 92.4 | 93.4 |
| 0.1 | 99.6 | 94.3 | 106.9 |
| 0.3 | 107.2 | 96 | 101.6 |
| 0.5 | 106.4 | 94.4 | 102.2 |
| 1 | 111.2 | 101.8 | 101.2 |

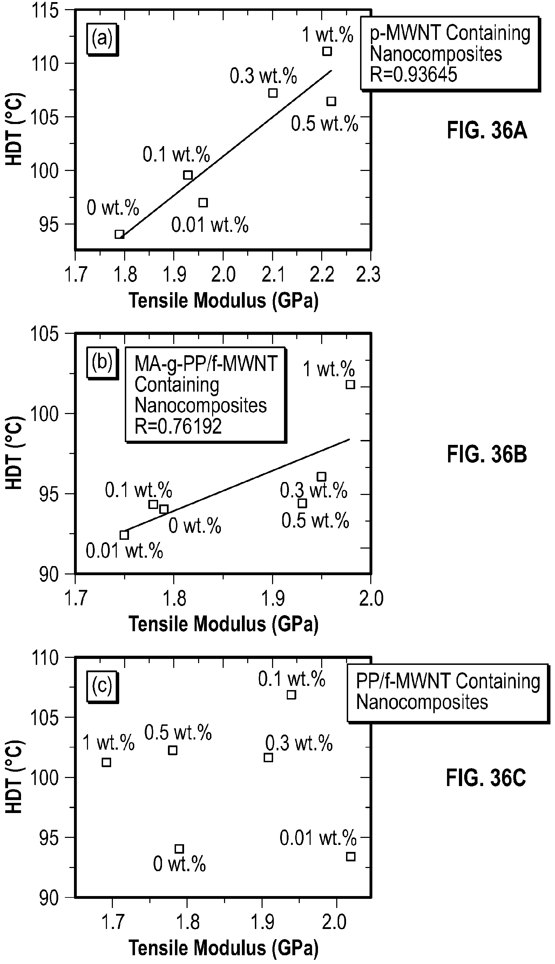

Higher HDT values are generally attributed to the ability of a material to retain stiffness at higher temperatures. In Figures 36A to 36C, HDT is plotted against tensile modulus at room temperature. Figures 36A to 36C display HDT vs. tensile modulus of various nanocomposites formed from (a) p-MWNT; (b) MA-g-PP/f-MWNT master batch, and (c) PP/f-MWNT master batch. MWNT weight concentrations for various data points are indicated in Figures 36A to 36C. A linear dependence was found in MA-g-PP/f-MWNT master batch and p-MWNT based samples, but not in the PP/f-MWNT based samples. Among the three types of nanocomposites, the MA-g-PP/f-MWNT master batch based sample had the lowest increase in HDT. Without wishing to be limited by theory, the lowest increase in HDT for the MA-g-PP/f-MWNT master batch based nanocomposite can be due to the presence of $\beta$ crystals, which have lower $T_m$ than $\alpha$ crystals. HDT of the PP/f-MWNT master batch based sample reached a maximum of 106.9 °C at 0.1 wt.% MWNT and then decreased to 101 °C at 1 wt.% MWNT. Further, without wishing to be limited by theory, such decrease can be due to the presence of the solution processed PP. It should be noted that although the 1 wt.% CNT containing PP/f-MWNT based nanocomposite had comparable tensile modulus to that of the control PP at room temperature, the former had 7 °C higher HDT than the control PP. Among all the nanocomposites, the highest HDT of 111.2 °C was achieved at 1 wt.% p-MWNT. This was an increase of 17.2 °C as compared to the control PP.

EXAMPLE 12

The thermal decomposition temperature of various samples prepared as described in Example 1 was also investigated.

To study the thermal decomposition behavior of PP in the composites, the samples were heated from room temperature to 600 °C using a TGA (TA Instruments Q500), and the mass loss of each sample was measured as a function of temperature in air environment at a heating rate of 20 °C/min. The temperature was calibrated using high purity standard (Ni) over a specific range of heating rates with a calibration parameter.

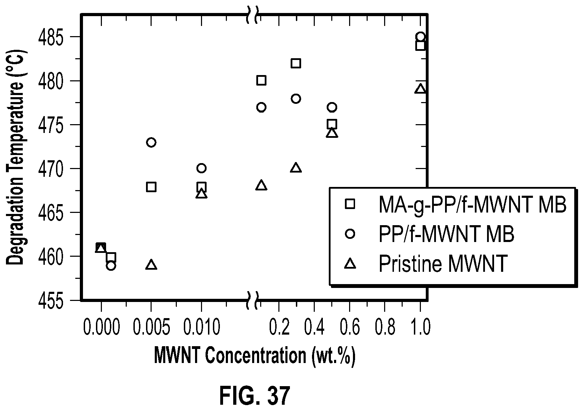

Incorporation of MWNT in the PP resulted in higher thermal decomposition temperature as compared to the control PP (Figure 37 and Table 12). Figure 37 displays thermal decomposition temperatures of PP/MWNT nanocomposites prepared from p-MWNT, MA-g-PP/f-MWNT master batch, and PP/f-MWNT master batch. Table 12 lists thermal decomposition temperatures of PP/MWNT nanocomposites prepared from p-MWNT, MA-g-PP/f-MWNT master batch and PP/f-MWNT master batch.

Table 12

| MWNT concentration (wt. %) | Thermal decomposition temperature (°C) of nanocomposites | | |
|---|---|---|---|
| | Via p-MWNT | Via MA-g-PP/f-MWNT MB | Via PP/f-MWNT MB |
| 0 | 461 | 461 | 461 |
| 0.01 | 467 | 468 | 470 |

(continued)

| MWNT concentration (wt. %) | Thermal decomposition temperature (°C) of nanocomposites | | |
|---|---|---|---|
| | Via p-MWNT | Via MA-g-PP/f-MWNT MB | Via PP/f-MWNT MB |
| 0.1 | 468 | 480 | 477 |
| 0.3 | 470 | 482 | 478 |
| 0.5 | 474 | 475 | 477 |
| 1 | 479 | 484 | 485 |

Thermal decomposition temperatures of PP/MWNT nanocomposites prepared from p-MWNT, MA-g-PP/f-MWNT master batch, and PP/f-MWNT master batch were higher than that of the neat PP. Thermal decomposition temperature of 1wt.% MWNT containing PP/MWNT nanocomposites prepared from PP/f-MWNT master batch was 24 °C higher than that of the neat PP.

Impact strength, while maintaining good tensile properties and HDT, can be important for some PP applications. Table 13 summarizes the data for various nanocomposites formed from p-MWNT; MA-g-PP/f-MWNT master batch; and PP/f-MWNT master batch.

Table 13

| CNT (wt.%) | Impact strength (KJ/m$^2$) | Tensile modulus (GPa) | Tensile strength/Yield stress (MPa) | $\varepsilon_b$ (%) | $T_c/T_m$ shifts (°C) | Notes |
|---|---|---|---|---|---|---|
| 1 | 2.2 (-8%) | 2.21 (+23%) | 44.4 (+18%) | 12.5 (-96%) | +10.9/N/A[1] | p-MWNT |
| 1 | 4.03 (+68%) | 1.98 (+11%) | 39.8 (+5%) | 19.9 (-94%) | +4.4/ +3.6 | MA-g-PP MB |
| 1 | 6.04 (+152%) | 1.69 (-5%) | 39.7 (+5%) | 113.4 (-65%) | +5.4/ +4.9 | PP MB |
| Note: 1 - a broad shoulder was observed peak before the major endotherm. | | | | | | |

**Claims**

1.    A method of making a high impact strength polypropylene (HIPP) composite, the method comprising:

(a) blending polypropylene-coated functionalized multiwall carbon nanotubes (PP/f-MWNT) with a first polypropylene (PP) to produce a PP and PP/f-MWNT mixture, wherein the PP/f-MWNT comprise functionalized multiwall carbon nanotubes (f-MWNT) coated with a second PP via non-covalent interactions, wherein the PP and PP/f-MWNT mixture comprises PP/f-MWNT in an amount of from 0.0005 wt.% to 5 wt.% f-MWNT, based on the total weight of the PP and PP/f-MWNT mixture, and wherein the first PP and the second PP are the same or different;
(b) melt blending at least a portion of the PP and PP/f-MWNT mixture to form a molten PP and PP/f-MWNT mixture; and
(c) shaping at least a portion of the molten PP and PP/f-MWNT mixture to form the HIPP composite.

2.    The method of claim 1 further comprising drying the first PP and/or the PP/f-MWNT at a temperature of from 50 °C to 100 °C, at a pressure of from 50 mbar to 1,013 mbar, and for a time period of from 30 minutes to 24 hours prior to the step (a) of blending PP/f-MWNT with a first PP, wherein the first PP is a powder **characterized by** an average powder particle size of from 10 μm to 1 mm, and wherein the PP/f-MWNT are a powder **characterized by** an average powder particle size of from 10 μm to 1 mm.

3.    The method of any one of claims 1 and 2, wherein the step (a) of blending PP/f-MWNT with a first PP further comprises subjecting the PP and PP/f-MWNT mixture to grinding, crushing, milling, chopping, or combinations thereof to form a PP and PP/f-MWNT mixture powder, wherein the PP and PP/f-MWNT mixture powder is **characterized by** an average powder particle size of from 10 μm to 1 mm.

4. The method of any one of claims 1 through 3, wherein melt blending comprises one or more selected from the group consisting of compounding, melt mixing, and extruding.

5. The method of any one of claims 1 through 4, wherein the step (b) of melt blending the PP and PP/f-MWNT mixture comprises heating the PP and PP/f-MWNT mixture to a temperature of from 150 °C to 240 °C to form the molten PP and PP/f-MWNT mixture.

6. The method of any one of claims 1 through 5, wherein shaping comprises one or more selected from the group consisting of molding, injection molding, extrusion molding, blow molding, compression molding, transfer molding, dip molding, rotational molding, matched molding, expandable bead molding, foam molding, vacuum plug assist molding, die casting, and extrusion.

7. The method of any one of claims 1 through 6, wherein the step (c) of shaping the molten PP and PP/f-MWNT mixture comprises (i) introducing at least a portion of the molten PP and PP/f-MWNT mixture to a mold, wherein the mold is **characterized by** a temperature of from 50 °C to 120 °C; and (ii) cooling the molten PP and PP/f-MWNT mixture in the mold to ambient temperature, to form the HIPP composite.

8. A high impact strength polypropylene (HIPP) composite comprising a continuous polymeric phase having dispersed therein a plurality of polypropylene-coated functionalized multiwall carbon nanotubes (PP/f-MWNT), wherein the continuous polymeric phase comprises a first polypropylene (PP), wherein the PP/f-MWNT comprise functionalized multiwall carbon nanotubes (f-MWNT) coated with a second PP via non-covalent interactions, wherein the HIPP composite comprises PP/f-MWNT in an amount of from 0.0005 wt.% to 5 wt.% f-MWNT, based on the total weight of the HIPP, and wherein the first PP and the second PP are the same or different.

9. The HIPP composite of claim 8 having an impact strength of from 4.0 kJ/m$^2$ to 6.5 kJ/m$^2$, as determined in accordance with ASTM D256 or the impact strength is increased by equal to or greater than 150% when compared to an impact strength of the first PP without the PP/f-MWNT, wherein the impact strength is determined in accordance with ASTM D256, or the impact strength is increased by equal to or greater than 200% when compared to an impact strength of the first PP without the PP/f-MWNT, wherein the impact strength is determined in accordance with ASTM D256.

10. The HIPP composite of claim 9 having a tensile modulus that is equal to or greater than a tensile modulus of the first PP without the PP/f-MWNT, wherein the tensile modulus is determined in accordance with ASTM D638.

11. The HIPP composite of any one of claims 8 through 10 having a yield stress that is equal to or greater than a yield stress of the first PP without the PP/f-MWNT, wherein the yield stress is determined in accordance with ASTM D638.

12. The HIPP composite of any one of claims 8 through 11 having a strain to failure of from 100% to 400%, as determined in accordance with ASTM D638.

13. The HIPP composite of any one of claims 3 through 12 having a heat deflection temperature that is increased by equal to or greater than 5 °C when compared to a heat deflection temperature of the first PP without the PP/f-MWNT, as determined in accordance with ASTM D648.

14. The HIPP composite of any one of claims 8 through 13 having a crystallization temperature that is increased by equal to or greater than 1 °C when compared to a crystallization temperature of the first PP without the PP/f-MWNT, as determined by differential scanning calorimetry (DSC) thermal analysis in accordance with ASTM E794-06, or having a crystallization half time at 135 °C of from 1 minute to 25 minutes, as determined by differential scanning calorimetry (DSC) thermal analysis in accordance with ASTM E2070-13, or wherein a volumetric concentration of the PP/f-MWNT in any 1 mm$^3$ of HIPP composite differs by less than 10% from an average volumetric concentration of the PP/f-MWNT in the HIPP composite as a whole.

15. An article comprising the HIPP composite of any one of claims 8 through 14, wherein the article is formed by injection molding of the HIPP composite.

**Patentansprüche**

1. Verfahren zur Herstellung eines hochschlagfesten Polypropylen (HIPP)-Komposits, wobei das Verfahren umfasst:

(a) Mischen von Polypropylen-beschichteten funktionalisierten mehrwandigen Kohlenstoffnanoröhren (PP/f-MWNT) mit einem ersten Polypropylen (PP), um ein Gemisch von PP und PP/f-MWNT zu erzeugen, wobei das PP/f-MWNT funktionalisierte mehrwandige Kohlenstoffnanoröhren (f-MWNT) umfasst, die mit einem zweiten PP über nicht kovalente Wechselwirkungen beschichtet sind, wobei das Gemisch von PP und PP/f-MWNT PP/f-MWNT in einer Menge von 0,0005 Gew.-% bis 5 Gew.-% f-MWNT umfasst, bezogen auf das Gesamtgewicht des Gemisches von PP und PP/f-MWNT, und wobei das erste PP und das zweite PP gleich oder verschieden sind;

(b) Schmelzmischen wenigstens eines Teils des Gemisches von PP und PP/f-MWNT, um ein geschmolzenes Gemisch von PP und PP/f-MWNT zu bilden; und

(c) Formen wenigstens eines Teils des geschmolzenen Gemisches von PP und PP/f-MWNT, um das HIPP-Komposit zu bilden.

2. Verfahren nach Anspruch 1, weiterhin umfassend Trocknen des ersten PP und/oder des PP/f-MWNT bei einer Temperatur von 50 °C bis 100 °C bei einem Druck von 50 mbar bis 1013 mbar und für eine Zeitdauer von 30 Minuten bis 24 Stunden vor dem Schritt (a) des Mischens von PP/f-MWNT mit einem ersten PP, wobei das erste PP ein durch eine durchschnittliche Pulverteilchengröße von 10 $\mu$m bis 1 mm gekennzeichnetes Pulver ist, und wobei das PP/f-MWNT ein durch eine durchschnittliche Pulverteilchengröße von 10 $\mu$m bis 1 mm gekennzeichnetes Pulver ist.

3. Verfahren nach irgendeinem der Ansprüche 1 und 2, wobei der Schritt (a) eines Mischens von PP/f-MWNT mit einem ersten PP weiterhin umfasst, das Gemisch von PP und PP/f-MWNT einem Schleifen, Zerkleinern, Mahlen, Zerhacken oder Kombinationen davon zu unterwerfen, um ein Pulver eines Gemisches von PP und PP/f-MWNT zu bilden, wobei das Pulver eines Gemisches von PP und PP/f-MWNT durch eine durchschnittliche Pulverteilchengröße von 10 $\mu$m bis 1 mm gekennzeichnet ist.

4. Verfahren nach irgendeinem der Ansprüche 1 bis 3, wobei Schmelzmischen eines oder mehrere aus der Gruppe bestehend aus Kompoundieren, Schmelz(ver)mischen und Extrudieren umfasst.

5. Verfahren nach irgendeinem der Ansprüche 1 bis 4, wobei der Schritt (b) eines Schmelzmischens des Gemisches von PP und PP/f-MWNT ein Erwärmen des Gemisches von PP und PP/f-MWNT auf eine Temperatur von 150 °C bis 240 °C umfasst, um das geschmolzene Gemisch von PP und PP/f-MWNT zu bilden.

6. Verfahren nach irgendeinem der Ansprüche 1 bis 5, wobei ein Formen eines oder mehrere aus der Gruppe bestehend aus Formen, Spritzgießen, Extrusionsformen, Blasformen, Formpressen, Transferformen, Tauchformen, Rotationsformen, angepasstem Formen, Formen von expandierbaren Kügelchen, Schaumformen, Vakuumpatrize bzw. Vakuumstopfen bzw. Vakuumanschluss unterstütztem Formen, Druckgießen und Extrusion umfasst.

7. Verfahren nach irgendeinem der Ansprüche 1 bis 6, wobei der Schritt (c) eines Formens des geschmolzenen Gemisches von PP und PP/f-MWNT (i) Einführen wenigstens eines Teils des geschmolzenen Gemisches von PP und PP/f-MWNT in eine Form, wobei die Form durch eine Temperatur von 50 °C bis 120 °C gekennzeichnet ist; und (ii) Abkühlen des geschmolzenen Gemisches von PP und PP/f-MWNT in der Form auf Umgebungstemperatur umfasst, um das HIPP-Komposit zu bilden.

8. Hochschlagfestes Polypropylen (HIPP)-Komposit, umfassend eine kontinuierliche polymere Phase, in der eine Vielzahl von Polypropylen-beschichteten funktionalisierten mehrwandigen Kohlenstoffnanoröhren (PP/f-MWNT) dispergiert ist, wobei die kontinuierliche polymere Phase ein erstes Polypropylen (PP) umfasst, wobei das PP/f-MWNT funktionalisierte mehrwandige Kohlenstoffnanoröhren (f-MWNT) umfasst, die mit einem zweiten PP über nicht kovalente Wechselwirkungen beschichtet sind, wobei das HIPP-Komposit PP/f-MWNT in einer Menge von 0,0005 Gew.-% bis 5 Gew.-% f-MWNT umfasst, bezogen auf das Gesamtgewicht des HIPP, und wobei das erste PP und das zweite PP gleich oder verschieden sind.

9. HIPP-Komposit nach Anspruch 8, mit einer Schlagfestigkeit von 4,0 kJ/m$^2$ bis 6,5 kJ/m$^2$, wie bestimmt gemäß ASTM D256, oder die Schlagfestigkeit um gleich oder mehr als 150 % erhöht ist, im Vergleich zur Schlagfestigkeit des ersten PP ohne das PP/f-MWNT, wobei die Schlagfestigkeit gemäß ASTM D256 bestimmt wird, oder die Schlagfestigkeit um gleich oder mehr als 200 % erhöht ist, im Vergleich zur Schlagfestigkeit des ersten PP ohne das PP/f-MWNT, wobei die Schlagfestigkeit gemäß ASTM D256 bestimmt wird.

10. HIPP-Komposit nach Anspruch 9, mit einem Zugmodul, der gleich oder größer als ein Zugmodul des ersten PP ohne das PP/f-MWNT ist, wobei das Zugmodul gemäß ASTM D638 bestimmt wird.

**11.** HIPP-Komposit nach irgendeinem der Ansprüche 8 bis 10, mit einer Streckspannung bzw. Streckgrenze (yield stress), die gleich oder größer als eine Streckspannung bzw. Streckgrenze des ersten PP ohne das PP/f-MWNT ist, wobei die Streckspannung bzw. Streckgrenze gemäß ASTM D638 bestimmt wird.

**12.** HIPP-Komposit nach irgendeinem der Ansprüche 8 bis 11, mit einer Bruchdehnung bzw. einer Versagensdehnung bzw. einem Versagen unter Beanspruchung (strain to failure) von 100 % bis 400 %, wie gemäß ASTM D638 bestimmt.

**13.** HIPP-Komposit nach irgendeinem der Ansprüche 3 bis 12, mit einer Wärmebeständigkeitstemperatur, die um gleich oder mehr als 5 °C erhöht ist, im Vergleich zu einer Formbeständigkeitstemperatur des ersten PP ohne das PP/f-MWNT, wie bestimmt gemäß ASTM D648.

**14.** HIPP-Komposit nach irgendeinem der Ansprüche 8 bis 13, mit einer Kristallisationstemperatur, die um gleich oder mehr als 1 °C erhöht ist, im Vergleich zu einer Kristallisationstemperatur des ersten PP ohne das PP/f-MWNT, wie durch thermische Analyse mit Differential-Scanning-Kalorimetrie (DSC) gemäß ASTM E794-06 bestimmt, oder mit einer Kristallisationshalbzeit bei 135 °C von 1 Minute bis 25 Minuten, wie durch thermische Analyse mit Differential-Scanning-Kalorimetrie (DSC) gemäß ASTM E2070-13 bestimmt, oder wobei eine volumetrische Konzentration des PP/f-MWNT in beliebigen 1 mm$^3$ HIPP-Komposit sich um weniger als 10 % von einer durchschnittlichen volumetrischen Konzentration des PP/f-MWNT in dem HIPP-Komposit als einem Ganzen unterscheidet.

**15.** Gegenstand, umfassend das HIPP-Komposit nach irgendeinem der Ansprüche 8 bis 14, wobei der Gegenstand durch Spritzgießen des HIPP-Komposits gebildet wird.

**Revendications**

**1.** Procédé de fabrication d'un composite de polypropylène à grande résistance au choc (HIPP), le procédé comprenant :

(a) le mélange de nanotubes de carbone multifeuillets fonctionnalisés revêtus de polypropylène (PP/f-MWNT) avec un premier polypropylène (PP) pour produire un mélange de PP et de PP/f-MWNT, le PP/f-MWNT comprenant des nanotubes de carbone multifeuillets fonctionnalisés (f-MWNT) revêtus d'un deuxième PP par des interactions non covalentes, le mélange de PP et de PP/f-MWNT comprenant du PP/f-MWNT en une quantité de 0,0005 % en poids à 5 % en poids de f-MWNT par rapport au poids total du mélange de PP et de PP/f-MWNT, et le premier PP et le deuxième PP étant identiques ou différents ;
(b) le mélange à l'état fondu d'au moins une partie du mélange de PP et de PP/f-MWNT pour former un mélange fondu de PP et de PP/f-MWNT ; et
(c) le façonnage d'au moins une partie du mélange fondu de PP et de PP/f-MWNT pour former le composite HIPP.

**2.** Procédé selon la revendication 1, comprenant en outre le séchage du premier PP et/ou du PP/f-MWNT à une température de 50 °C à 100 °C sous une pression de 50 mbar à 1013 mbar pendant un laps de temps de 30 minutes à 24 heures avant l'étape (a) de mélange du PP/f-MWNT avec un premier PP, le premier PP étant une poudre **caractérisée par** une granulométrie moyenne de la poudre de 10 µm à 1 mm, et le PP/f-MWNT étant une poudre **caractérisée par** une granulométrie moyenne de la poudre de 10 µm à 1 mm.

**3.** Procédé selon l'une des revendications 1 et 2, dans lequel l'étape (a) de mélange du PP/f-MWNT avec un premier PP comprend en outre la soumission du mélange de PP et de PP/f-MWNT à un broyage, un concassage, une mouture, un découpage ou des combinaisons de ces techniques pour former une poudre d'un mélange de PP et de PP/f-MWNT, la poudre de mélange de PP et de PP/f-MWNT étant **caractérisée par** une granulométrie moyenne de la poudre de 10 µm à 1 mm.

**4.** Procédé selon l'une des revendications 1 à 3, dans lequel le mélange à l'état fondu comprend une ou plusieurs techniques choisies dans le groupe consistant en le mélangeage, le mélange à l'état fondu et l'extrusion.

**5.** Procédé selon l'une des revendications 1 à 4, dans lequel l'étape (b) de mélange à l'état fondu du mélange de PP et de PP/f-MWNT comprend le chauffage du mélange de PP et de PP/f-MWNT à une température de 150 °C à 240 °C pour former le mélange de PP et de PP/f-MWNT fondu.

**6.** Procédé selon l'une des revendications 1 à 5, dans lequel le façonnage comprend une ou plusieurs techniques choisies dans le groupe consistant en le moulage, le moulage par injection, le moulage par extrusion, le moulage par soufflage, le moulage par compression, le moulage par transfert, le moulage au trempé, le rotomoulage, le formage à la presse, le moulage de perles expansées, le moulage de mousse, le thermoformage sous vide assisté par poinçon, le moulage sous pression et l'extrusion.

**7.** Procédé selon l'une des revendications 1 à 6, dans lequel l'étape (c) de façonnage du mélange de PP et de PP/f-MWNT comprend (i) l'introduction d'au moins une partie du mélange de PP et de PP/f-MWNT dans un moule, le moule étant **caractérisé par** une température de 50 °C à 120 °C ; et (ii) le refroidissement du mélange de PP et de PP/f-MWNT fondu dans le moule à la température ambiante pour former le composite HIPP.

**8.** Composite de polypropylène à grande résistance au choc (HIPP) comprenant une phase polymère continue dans laquelle sont dispersés une pluralité de nanotubes de carbone multifeuillets fonctionnalisés revêtus de polypropylène (PP/f-MWNT), la phase polymère continue comprenant un premier polymère PP, le PP/f-MWNT comprenant des nanotubes de carbone multifeuillets fonctionnalisés (f-MWNT) revêtus d'un deuxième PP par des interactions non covalentes, le composite HIPP comprenant le PP/f-MWNT en une quantité de 0,0005 % en poids à 5 % en poids de f-MWNT par rapport au poids total du HIPP, le premier PP et le deuxième PP étant identiques ou différents.

**9.** Composite HIPP selon la revendication 8, ayant une résistance au choc de 4,0 kJ/m$^2$ à 6,5 kJ/m$^2$, telle que déterminée conformément à ASTM D256, ou la résistance au choc est augmentée d'un pourcentage supérieur ou égal à 150 % par comparaison avec une résistance au choc d'un premier PP sans le PP/f-MWNT, la résistance au choc étant déterminée conformément à ASTM D256, ou la résistance au choc est augmentée d'une quantité supérieure ou égale à 200 % par comparaison avec une résistance au choc du premier PP sans le PP/f-MWNT, la résistance au choc étant déterminée conformément à ASTM D256.

**10.** Composite HIPP selon la revendication 9, ayant un module d'élasticité en traction qui est supérieur ou égal à un module d'élasticité en traction du premier PP sans le PP/f-MWNT, le module d'élasticité en traction étant déterminé conformément à ASTM D638.

**11.** Composite HIPP selon l'une des revendications 8 à 10, ayant une contrainte d'écoulement supérieure ou égale à une contrainte d'écoulement du premier PP sans le PP/f-MWNT, la contrainte d'écoulement étant déterminée conformément à ASTM D638.

**12.** Composite HIPP selon l'une des revendications 8 à 11, ayant un rapport déformation/rupture de 100 % à 400 %, tel que déterminé conformément à ASTM D 638.

**13.** Composite HIPP selon l'une des revendications 3 à 12, ayant une stabilité dimensionnelle à chaud augmentée d'une quantité supérieure ou égale à 5 °C par comparaison avec une stabilité dimensionnelle à chaud du premier PP sans le PP/f-MWNT, telle que déterminée conformément à ASTM D648.

**14.** Composite HIPP selon l'une des revendications 8 à 13, ayant une température de cristallisation augmentée d'une quantité supérieure ou égale à 1 °C par comparaison avec une température de cristallisation du premier PP sans le PP/f-MWNT, telle que déterminée par analyse calorimétrique différentielle (ACD) conformément à ASTM E794-06, ou ayant une demi-vie de cristallisation à 135 °C de 1 minute à 25 minutes, telle que déterminée par analyse calorimétrique différentielle (ACD) conformément à ASTM E2070-13, ou dans lequel une concentration volumique du PP/f-MWNT, dans tout 1 mm$^3$ du composite HIPP, s'écarte de moins de 10 % d'une concentration volumétrique moyenne du PP/f-MWNT dans le composite HIPP pris dans son ensemble.

**15.** Article comprenant le composite HIPP selon l'une des revendications 8 à 14, dans lequel l'article est formé par moulage par injection du composite HIPP.

**FIG. 1**

Control
PP

0.001 wt. %
f-MWNT

0.005 wt. %
f-MWNT

0.01 wt. %
f-MWNT

FIG. 2A

Control
PP

0.001 wt. %
f-MWNT

0.005 wt. %
f-MWNT

0.01 wt. %
f-MWNT

FIG. 2B

FIG. 3

FIG. 4

FIG. 5A

FIG. 5B

FIG. 5C

FIG. 6A

FIG. 6B

FIG. 6C

FIG. 7A

FIG. 7B

FIG. 7C

FIG. 8A

FIG. 8B

FIG. 8C

FIG. 9A  FIG. 9B  FIG. 9C

FIG. 9D  FIG. 9E  FIG. 9F

FIG. 9G  FIG. 9H  FIG. 9I

**PP/f-MWNT MB**

FIG. 10A

**MA-g-PP/f-MWNT MB**

FIG. 10B

**p-MWNT**

FIG. 10C

FIG. 10D

**FIG. 11**

**FIG. 12**

## PP/MWNT Nanocomposite at 1 wt. % MWNT Concentration (a-c)

FIG. 13A

FIG. 13B

FIG. 13C

## PP/MWNT Nanocomposite via p-MWNT (d-i)

FIG. 13D

FIG. 13E

FIG. 13F

FIG. 13G

FIG. 13H

FIG. 13I

FIG. 14

FIG. 15A

FIG. 15B

FIG. 15C

FIG. 15D

FIG. 15E

FIG. 15F

FIG. 15G

FIG. 15H

FIG. 15I

FIG. 16

FIG. 17A

FIG. 17B

FIG. 17C

FIG. 17D

Impact
Specimens

14.1° (110)-α form
15.0° (113)-γ form
16.1° (300)-β form
16.9° (040)-α form
18.5° (130)-α form
20.2° (117)-γ form
21.2° (301)-β form
22.1° (111)-α form
22.2° (041)-α form

Tested
Position

FIG. 18A

FIG. 18B

FIG. 18C

FIG. 19A

FIG. 19B

FIG. 19C

FIG. 20A

FIG. 20B

FIG. 20C

## Via MA-g-PP/f-MWNT MB

### 1st Heating Cycle

FIG. 20D

**FIG. 21A**

**FIG. 21B**

**FIG. 21C**

**FIG. 21D**

**FIG. 22**

Control PP

FIG. 23A

100 wt.% Solution Processed PP

FIG. 23B

Injection Molded PP Sample Containing 19 wt.% Solution Processed PP

FIG. 23C

FIG. 24A

FIG. 24B

Control PP

**FIG. 25A**

p-MWNT

**FIG. 25B**

MA-g-PP/f-MWNT MB

**FIG. 25C**

PP/f-MWNT MB

**FIG. 25D**

EP 3 397 591 B1

FIG. 26A  FIG. 26B  FIG. 26C

FIG. 26D  FIG. 26E

59

PP/f-MWNT MB                MA-g-PP/f-MWNT MB                p-MWNT

Notch

Crack Propagating Direction

End

FIG. 27A                     FIG. 27B                     FIG. 27C

**FIG. 28**

**FIG. 29**

FIG. 30

**FIG. 31A**

**FIG. 31B**

**FIG. 31C**

**FIG. 31D**

**FIG. 31E**

**FIG. 31F**

**FIG. 32A**

**FIG. 32B**

**FIG. 32C**

**FIG. 32D**

**FWHM of (040) WAXD Peak on Impact Specimen**

FIG. 33A

**FWHM of (040) WAXD Peak on Tensile Specimen**

FIG. 33B

**Viscosity (at 300 s$^{-1}$) of the PP and PP/MWNT Nanocomposites**

FIG. 33C

**FIG. 34**

**FIG. 35**

FIG. 36A

FIG. 36B

FIG. 36C

FIG. 37

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1654528 A

- US 62323146

**Non-patent literature cited in the description**

- **V. CAUSIN et al.** Nucleation, structure and lamellar morphology of isotactic polypropylene filled with polypropylene-grafted multiwalled carbon nanotubes. *European Polymer Journal,* 2009, vol. 45 (8), 2155-2163
- **B.-X. YANG et al.** Enhancement of the mechanical properties of polypropylene using polypropylene-grafted multiwalled carbon nanotubes. *Composites Science and Technology,* 2008, vol. 68 (12), 2490-2497

- **QINGLIANG HE et al.** Flame-Retardant Polypropylene/Multiwall Carbon Nanotube Nanocomposites: Effects of Surface Functionalization and Surfactant Molecular Weight. *Macromolecular Chemistry and Physics,* 2014, vol. 215 (4), 327-340